# EUROPÄISCHE PATENTSCHRIFT

(11) **EP 2 929 426 B1**
(45) Veröffentlichungstag und Bekanntmachung des Hinweises auf die Patenterteilung: **27.02.2019**
(21) Anmeldenummer: 13805316.0
(22) Anmeldetag: 04.12.2013
(51) Int. Cl.: G06F 3/12

(54) **SYSTEM, VERFAHREN UND COMPUTERPROGRAMMPRODUKT ZUM BEDRUCKEN EINER VIELZAHL VON INFORMATIONSTRÄGERN MIT EINEM INDIVIDUELLEN SATZ VON INFORMATIONEN**
SYSTEM, METHOD AND COMPUTER PROGRAM PRODUCT FOR PRINTING AN INDIVIDUAL SET OF INFORMATION ON A MULTIPLICITY OF INFORMATION STORAGE MEDIA
SYSTÈME, PROCÉDÉ ET PRODUIT-PROGRAMME D'ORDINATEUR POUR IMPRIMER UNE PLURALITÉ DE SUPPORTS D'INFORMATIONS AVEC UN ENSEMBLE INDIVIDUEL D'INFORMATIONS

(30) Priorität: 04.12.2012 DE 102012111768
(43) Veröffentlichungstag der Anmeldung: 14.10.2015
(73) Patentinhaber: CTS Eventim AG & Co. KGaA, 81673 München (DE)
(72) Erfinder: SCHULENBERG, Klaus-Peter, 28195 Bremen (DE)
(74) Vertreter: RGTH
(86) Internationale Anmeldenummer: PCT/EP2013/075466
(87) Internationale Veröffentlichungsnummer: WO 2014/086821

(56) Entgegenhaltungen:
- EP-A1- 2 463 101
- DE-A1- 19 936 989
- US-A1- 2004 036 916
- US-A1- 2008 062 466
- US-A1- 2009 100 426
- US-A1- 2009 219 563

## Beschreibung

Die Erfindung betrifft ein System zum Bedrucken einer Vielzahl von Informationsträgern mit einem individuellen Satz von Informationen. In einer bevorzugten Ausführungsform der Erfindung wird dies durch ein System realisiert, das eingerichtet ist, um innerhalb einer vordefinierten Zeitspanne für einen einzelnen Informationsträger eine entsprechende Referenz aus der Speichervorrichtung zu holen, für den einzelnen Informationsträger einen entsprechenden Satz von Informationen aus einer Speichereinrichtung mittels der Referenz zu holen und anzuordnen, und eine Druckvorrichtung anzuweisen, den einzelnen Informationsträger mit dem geholten und angeordneten Satz von Information zu bedrucken.

### Stand der Technik

Herkömmlicherweise werden Informationsträger, die in großer Zahl mit jeweils ähnlichem Inhalt zu bedrucken sind, einer Druckvorrichtung einzeln zugeführt und stückweise bedruckt. Die notwendigen Informationen zum Bedrucken der Informationsträger werden z. B. einzeln nachgeladen oder vorab bereitgestellt.

Dieser Stand der Technik realisiert keine gesteigerte sequenzielle Verarbeitung der Informationsträger.

Alternativ können die Informationsträger auch in einer Endlosform bereitgehalten werden, die einem Drucker fortlaufend zugeführt werden. Die notwendigen Informationen zum Bedrucken der Informationsträger werden z. B. in einer Warteschlange bereitgehalten, wobei jeweils die Warteschlange auf den Druck oder umgekehrt warten muss, je nachdem, welcher Vorgang zuerst vollendet wurde.

Dem Prinzip nach unterscheidet sich die Endlosalternative nicht von der stückweisen Alternative, lediglich das Zuführen und Nachladen der Informationen wurde automatisiert. Jedoch bestimmt noch immer die langsamste Komponente des Systems die Verarbeitungsgeschwindigkeit.

Des Weiteren offenbart die Druckschrift DE 101 54 496 A1 einen Drucker und ein Verfahren zum Drucken, die ein Speichern von Formularen, Hintergründen und Überlagerungen in einem Bittabellen-Druckerspeicher ermöglichen, um eine Aufbereitungszeit zu verhindern, die Bildern zugeordnet ist, die mehreren Verwendungszwecken unterliegen. Ein Hintergrundbild kann z. B. für eine Diapositivpräsentation als eine Bittabellen-Darstellung in einem Bildspeicher gespeichert und nach Bedarf wieder aufgerufen werden. Dieses Hintergrundbild wird dann mit in Echtzeit aufbereiteten seitenspezifischen Informationen überlagert, wie z. B. das Überlagern eines Textes. Das vorgespeicherte Formular oder die Hintergrund-Bittabelle wird verwendet, um den Druckerbildspeicher unmittelbar vor dem Speichern von seitenspezifischen Informationen zu initialisieren.

Aus der US 2008/062466 A1 ist eine Hochgeschwindigkeitsdruckumgebung bekannt, bei dem plattformunabhängige Daten wie Textdaten, Bilddaten oder Barcode-Daten in einer Datei abgelegt werden. Nach einem Rendering-Schritt werden Informationsträger bedruckt.

Die EP 2 463 101 A1 offenbart ein System und ein Verfahren zur Erzeugung und Inspektion von Drucken mit statischen und variablen Inhalten. Das System umfasst eine Druckeinheit, eine Inspektionseinheit und eine Recheneinheit. Der Druckvorgang und der Inspektionsvorgang läuft automatisch, inline und in Echtzeit ab.

Auch diese Stände der Technik realisieren nicht das Potenzial einer referenzierenden Verarbeitung.

### Darstellung der Erfindung: Aufgabe, Lösung, Vorteile

Die vorstehend beschriebenen Vorschläge realisieren lediglich eine konventionelle Verarbeitung und Druck der Informationsträger. Es bleibt jedoch das Potenzial unberücksichtigt, das eine referenzierende Verarbeitung und Druck der Informationsträger bietet, und demzufolge wird auch keine Lösung für ein System zum Bedrucken einer Vielzahl von Informationsträgern mit einem individuellen Satz von Informationen bereitgestellt.

Daher liegt der Erfindung die Aufgabe zugrunde, das vorstehend beschriebene Problem zu lösen.

Die erfindungsgemäße Lösung sieht in einem ersten Aspekt ein System zum Bedrucken einer Vielzahl von Informationsträgern mit einem individuellen Satz von Informationen vor, umfassend eine Speichereinrichtung, die eingerichtet ist, um für jeden einzelnen der Vielzahl von Informationsträgern einen individuellen Satz von Informationen zu speichern, und eine Sequenz von Elementen für jeden einzelnen der Vielzahl von Informationsträgern zu speichern, wobei jede Sequenz eine Referenz auf den entsprechenden individuellen Satz von Informationen aufweist, eine Druckvorrichtung, die eingerichtet ist, um jeden einzelnen der Informationsträger mit dem entsprechenden Satz von Informationen zu bedrucken, und einen Prozessor, der eingerichtet ist, um innerhalb einer vordefinierten Zeitspanne: für einen einzelnen Informationsträger die entsprechende Referenz aus der Speichervorrichtung zu holen, für den einzelnen Informationsträger den entsprechenden Satz von Informationen aus der Speichereinrichtung mittels der Referenz zu holen und anzuordnen; die Druckvorrichtung anzuweisen, den einzelnen Informationsträger mit dem geholten und angeordneten Satz von Information zu bedrucken, und eine Vollendung des Druckvorgangs abzuwarten, wobei erfindungsgemäß ein datenbankgestütztes Kuvertieren stattfindet, wobei ein Einzelblattdrucksystem vorgesehen ist, welches eingerichtet ist, mindestens einen Lieferschein, insbesondere ein Anschreiben inklusive einer postalischen Adresse, zu drucken, wobei ein Zusammenführen des mindestens einen Lieferscheins mit mindestens einem der Informationsträger, insbesondere einem Ticket, stattfindet, und wobei gegebenenfalls mehrere Informationsträger, insbesondere mehrere Tickets, pro Sendung und/oder pro zu versendendem Kuvert mit dem jeweiligen Lieferschein zusammengeführt werden und als fertige Sendung aus einem Kuvertiersystem ausgegeben werden, wobei die Vielzahl von Informationsträgern eine Vielzahl von Tickets ist, wobei das System ferner eine Prüfvorrichtung umfasst, die eingerichtet ist, um ein einzelnes bedrucktes Ticket mit dem entsprechenden Satz von Informationen zu vergleichen wobei der Prozessor weiterhin eingerichtet ist, um innerhalb der vordefinierten Zeitspanne t: nach dem vollendeten Druckvorgang, die Prüfvorrichtung zum Vergleichen des einzelnen Tickets anzuweisen, und die Vollendung des Prüfvorgangs abzuwarten, wobei ferner ein Schneideautomat mit mindestens zwei Barcodelesern vorgesehen ist, wobei der der Ticket-ID-Code mit einem ersten Barcodelesekopf und der Zugangskontrollcode mit einem zweiten Barcodelesekopf gelesen wird, wobei die gelesene Ticket-ID mit einer Information aus einer Steuerdatei verglichen wird, und wobei, falls keine Ticket-ID lesbar ist, der Zugangskontrollcode gelesen wird und mit einer Information aus der Steuerdatei verglichen wird, und wobei, wenn keine der beiden Barcode-Informationen lesbar ist und/oder korrekt verifiziert werden kann, das Ticket mit einem Lesefehler, durch Aussteuern des Kuvertierprozesses, zur manuellen Nachkontrolle entzogen wird.

In einer ersten Ausgestaltung des ersten Aspekts umfasst vorzugsweise der Satz von Informationen zumindest zwei Bilddateien. In diesem Fall ist vorzugsweise eine erste der Bilddateien eine Hintergrundbilddatei und eine zweite der Bilddateien eine Vordergrundbilddatei, wobei die Hintergrundbilddatei für alle der Vielzahl von Informationsträgern identisch ist und die Vordergrundbilddatei für jeden einzelnen der Vielzahl von Informationsträgern individuell verschieden ist. In letzterem Fall wird vorzugsweise der Anordnungsvorgang durch den Prozessor derart ausgeführt, dass die Vordergrundbilddatei der Hintergrundbilddatei überlagert wird. Außerdem wird vorzugsweise der Druckvorgang durch den Prozessor derart ausgeführt, dass die Vordergrundbilddatei und die Hintergrundbilddatei zu einem vordefinierten Satz von Parametern zusammengefasst werden. In letzterem Fall ist vorzugsweise der vordefinierte Satz von Parametern ein Druckjob.

In einer zweiten Ausgestaltung des ersten Aspekts wird vorzugsweise zumindest die Vordergrundbilddatei von einer externen Quelle vorab bereitgestellt. Alternativ oder zusätzlich werden vorzugsweise die Bilddateien in einem Format gespeichert, das aus einer Gruppe ausgewählt wird, die TIF-Dateien und PNG-Dateien enthält. In diesem Fall liegt vorzugsweise die zumindest eine der Bilddateien in komprimierter Form vor.

In einer dritten Ausgestaltung des ersten Aspekts werden die Schritte Holen, Holen und Anordnen, Bedrucken und Abwarten vorzugsweise unter Echtzeitbedingungen während der Zeitspanne t durchgeführt. Außerdem werden die Speicherschritte vorzugsweise separat von den Schritten Holen, Holen und Anordnen, Bedrucken und Abwarten vorbereitend unter eigenen Echtzeitbedingungen ausgeführt. Alternativ werden die Speicherschritte separat von den Schritten Holen, Holen und Anordnen, Bedrucken und Abwarten vorbereitend und nicht unter Echtzeitbedingungen ausgeführt.

In einer vierten Ausgestaltung des ersten Aspekts beginnt vorzugsweise jede Sequenz von Elementen mit einem eindeutigen Identifikator zur Identifikation des jeweiligen Informationsträgers. In diesem Fall enthält vorzugsweise jede Sequenz von Elementen die Referenz auf den Satz von Informationen in Form eines Pfads und Dateinamens. Außerdem werden vorzugsweise die Sequenzen von Elementen in einer Datei im ASCII-Format abgespeichert. In letzterem Fall wird vorzugsweise die Datei im Format Comma Separated Value, CSV, gespeichert.

In einer fünften Ausgestaltung ist der Prozessor vorzugsweise eingerichtet, um während der aktuellen Druckvorgänge jede einzelne Referenz nach erfolgtem Druckvorgang umzubenennen.

In einer sechsten Ausgestaltung des ersten Aspekts ist vorzugsweise der Prozessor eingerichtet, um während der aktuellen Druckvorgänge für die nächste Vielzahl von Informationsträgern der entsprechenden nächsten Referenzen aus der Speichervorrichtung zu holen, für die nächste Vielzahl von Informationsträgern den entsprechenden Satz von Informationen aus der Speichervorrichtung mittels der Referenzen zu holen und anzuordnen, und die Vollendung der aktuellen Druckvorgänge abzuwarten. In diesem Fall ist vorzugsweise nach Vollendung der aktuellen Druckvorgänge der Prozessor eingerichtet, um den aktuellen Satz von Informationen in der Speichervorrichtung zu verschieben. Alternativ ist vorzugsweise nach Vollendung der aktuellen Druckvorgänge der Prozessor eingerichtet, um den aktuellen Satz von Informationen in der Speichervorrichtung zu löschen. In beiden Fällen ist vorzugsweise der Prozessor eingerichtet, um den Druckvorgang mit einer ersten Priorität auszuführen, den Holvorgang mit einer zweiten Priorität auszuführen, die kleiner als die erste Priorität ist, und den Verschiebe- bzw. Löschvorgang mit einer dritten Priorität auszuführen, die kleiner als die erste und zweite Priorität ist. Erfindungsgemäß umfasst das System weiterhin eine Prüfvorrichtung, die eingerichtet ist, um einen einzelnen bedruckten Informationsträger mit dem entsprechenden Satz von Informationen zu vergleichen, wobei der Prozessor weiterhin eingerichtet ist, um innerhalb der vordefinierten Zeitspanne nach dem vollendeten Druckvorgang, die Prüfvorrichtung zum Vergleichen des einzelnen Informationsträgers anzuweisen, und die Vollendung des Prüfvorgangs abzuwarten. In diesem Fall ist vorzugsweise der Prozessor weiterhin eingerichtet, um innerhalb der vordefinierten Zeitspanne das Vergleichsergebnis in der entsprechenden Sequenz von Elementen zu protokollieren.

In einer achten Ausgestaltung des ersten Aspekts ist vorzugsweise der Informationsträger zumindest einer aus einem einzelnen Papierbogen oder einem Endlospapierbogen.

In einem zweiten Aspekt ist ein Prozessor zur Verwendung in einem System gemäß dem ersten Aspekt als Verwaltungsvorrichtung vorgesehen.

In einem dritten Aspekt ist ein Verfahren zum Steuern eines Systems zum Bedrucken einer Vielzahl von Informationsträgern mit einem individuellen Satz von Informationen vorgesehen, umfassend die Schritte Speichern, für jeden einzelnen der Vielzahl von Informationsträgern, eines individuellen Satzes von Informationen, und Speichern einer Sequenz von Elementen für jeden einzelnen der Vielzahl von Informationsträgern, wobei jede Sequenz eine Referenz auf den entsprechenden individuellen Satz von Informationen aufweist, innerhalb einer vordefinierten Zeitspanne: - Holen, für einen einzelnen Informationsträger, der entsprechenden Referenz aus der Speichervorrichtung, - Holen und Anordnen, für den einzelnen Informationsträger, des entsprechenden Satzes von Informationen aus der Speichereinrichtung mittels der Referenz, - Anweisen einer Druckvorrichtung, den einzelnen Informationsträger mit dem geholten und angeordneten Satz von Information zu bedrucken, und - Abwarten einer Vollendung des Druckvorgangs, wobei erfindungsgemäß in weiteren Schritten ein datenbankgestütztes Kuvertieren stattfindet, wobei ein Einzelblattdrucksystem vorgesehen ist, welches eingerichtet ist, mindestens einen Lieferschein, insbesondere ein Anschreiben inklusive einer postalischen Adresse, zu drucken, wobei ein Zusammenführen des mindestens einen Lieferscheins mit mindestens einem der Informationsträger, insbesondere einem Ticket, stattfindet, und wobei gegebenenfalls mehrere Informationsträger, insbesondere mehrere Tickets, pro Sendung und/oder pro zu versendendem Kuvert mit dem jeweiligen Lieferschein zusammengeführt werden und als fertige Sendung aus einem Kuvertiersystem ausgegeben werden, wobei die Vielzahl von Informationsträgern eine Vielzahl von Tickets ist, wobei das Ticket einen Zugangskontrollcode und einen Ticket-ID-Code umfasst, wobei das Verfahren ferner die Schritte umfasst: Vergleichen eines einzelnen bedruckten Tickets mittels einer Prüfvorrichtung mit dem entsprechenden Satz von Informationen und innerhalb der vordefinierten Zeitspanne t: nach dem vollendeten Druckvorgang, Anweisen der Prüfvorrichtung zum Vergleichen des einzelnen Tickets, und Abwarten der Vollendung des Prüfvorgangs, wobei ferner die Schritte vorgesehen sind: Lesen des Ticket-ID-Codes mit einem ersten Barcodelesekopf eines Schneideautomaten und Lesen des Zugangskontrollcodes mit einem zweiten Barcodelesekopf des Schneideautomaten, Vergleichen der gelesenen Ticket-ID mit einer Information aus einer Steuerdatei und, falls keine Ticket-ID gelesen werden kann, Lesen und Vergleichen des Zugangskontrollcodes mit einer Information aus der Steuerdatei, und wenn keine der beiden Barcode-Informationen lesbar ist und/oder korrekt verifiziert werden kann, Entziehen des Tickets mit einem Lesefehler zu einer manuellen Nachkontrolle, durch Aussteuern des Kuvertierprozesses.

In Ausgestaltungen realisiert das Verfahren des dritten Aspekts vorzugsweise die Merkmale der Ausgestaltungen des ersten Aspekts.

In einem vierten Aspekt ist ein Computerprogrammprodukt mit Programmcodeabschnitten zum Durchführen des Verfahrens gemäß dem dritten Aspekt vorgesehen, bei Ausführung des Computerprogrammprodukts auf einer oder mehreren Computereinrichtungen. Das Computerprogrammprodukt ist vorzugsweise auf einem computerlesbaren Medium gespeichert.

In einer bevorzugten Weiterbildung ist das Verfahren als Ticketbestellprozess ausgebildet.

Bevorzugt kann ein Kunde entweder selber auf einer Ticketbestellwebseite und/oder per Telefon bei einer Ticketbestellhotline eine Veranstaltung wählen. Nach Auswahl der Veranstaltung und des Veranstaltungszeitraumes wird dann vom System die Verfügbarkeit des Platzes sowie gegebenenfalls weitere Bedingungen geprüft. Die Platzwahl kann dabei beispielsweise mittels eines Saalplanes des Veranstaltungsortes vorgenommen werden, wobei der Kunde bevorzugt auf der Ticketbestellwebseite einen gewünschten Sitzplatz markiert, beispielsweise indem er in einem auf der Ticketbestellwebseite angezeigten Saalplan den gewünschten Sitzplatz durch Mausclick markiert.

Bevorzugt gestaltet sich der generelle Ticketproduktionsablauf wie folgt. In einem ersten Schritt bestellt der Kunde in einem Webportal oder in einem Callcenter, insbesondere via Telefon, ein Ticket. Dabei wird in Echtzeit die Verfügbarkeit der Veranstaltung und/oder des Sitzplatzes sowie gegebenenfalls weitere die Veranstaltung beziehungsweise die Buchung der Veranstaltung betreffende Parameter geprüft. Der Vorgang kann mit der Buchung direkt abgeschlossen werden.

Nach Eingabe der Zahlungsparameter, wie beispielsweise Kreditkartennummer usw., wird direkt eine Systemanfrage an beispielsweise den Kreditkartenherausgeber, insbesondere die die Kreditkarte herausgebende Bank, gestellt, um die Deckung der Karte für die Zahlung zu prüfen. Jedoch ist auch jedes andere geeignete Verfahren für die Durchführung der Zahlung denkbar. So ist beispielsweise auch eine Zahlung per Lastschriftverfahren möglich. In einem nächsten Schritt wird die Kundenbestellung in eine Datenbank eingestellt. Zum einen ist dadurch sichergestellt, dass für das bestellte oder reservierte Event bzw. die Veranstaltung der bestellte Sitzplatz etc. für weitere Buchungen blockiert ist. Zum anderen ist dadurch sichergestellt, dass nach Prüfung z. B. des Zahlungseinganges die Erstellung des physischen Tickets, d. h. der Druck des physischen Tickets und darauffolgend der Versand erfolgen kann. Bevorzugt arbeitet das System beziehungsweise das Verfahren immer kunden- und/oder prioritätsbezogen. In diesem Zusammenhang bedeutet kundenbezogen, dass, wenn ein Kunde Karten für verschiedene Veranstaltungen gebucht hat, diese gemeinsam erstellt oder gedruckt werden und/oder gegebenenfalls gemeinsam versendet werden. Jedoch ist auch Abarbeitung der Aufträge, insbesondere der Bestellaufträge, nach dem aus dem Stand der Technik bekannten First in-/First out-Prinzip (FIFO) möglich. Weiter bevorzugt ist eine Bearbeitung der Aufträge nach verschiedenen Prioritäten. Dabei wird, bevorzugt in einem Selektionsverfahren, entsprechend der verschiedenen Prioritäten der eingegangenen Aufträge die Bearbeitungsreihenfolge, insbesondere die Reihenfolge der Druckaufträge zur Erstellung der physischen Tickets, bestimmt. Die Prioritäten, aufgrund welcher eine andere Bearbeitungsreihenfolge in einem Selektionsverfahren stattfinden kann, können beispielsweise eine Expressbestellung, auftretende Probleme beim Zahlungseingang oder Ähnliches betreffen oder umfassen.

Wenn mehrere zu verarbeitende Kundenbestellungen im System erfasst beziehungsweise in das System eingestellt sind, können diese entsprechend des Prioritätenstatus verarbeitet werden. Dazu gibt es die Möglichkeit, die Kundenbestellungen, insbesondere entsprechend der verteilten Prioritäten, zu selektieren und zu einem Gesamtdruckjob zusammenzufassen. Beispielsweise kann aus Gründen der Handhabbarkeit in der Produktion ein Gesamtdruckjob den Druck von ca. 3.000 Tickets umfassen.

Nach der, insbesondere prioritätsbezogenen, Selektion werden die Daten abgerufen und übertragen, wobei in dem Datenbanksystem oder von dem Datenbanksystem eine Overlaydatei erstellt wird. Die Overlaydatei umfasst variable Elemente, welche zu einem Bild zusammengefasst werden. Die variablen Elemente umfassen beispielsweise einen Ticketbarcode, die dem Ticket zugeordnete Reihe und/oder den Sitzplatz, den Ticket- beziehungsweise Veranstaltungspreis sowie Werbung und/oder Werbeinformationen. Jedoch sind auch weitere variable Elemente, welche zu einem Bild zusammengefasst werden können, denkbar. Ferner erstellt das Datenbanksystem eine Definitionsdatei, welche beschreibt, zu welcher Overlaydatei welches Hintergrundbild gedruckt werden soll. Die Definitionsdatei bestimmt somit die Zuordnung von Overlaydatei und Hintergrundbild. Ferner enthält die Definitionsdatei eine Verzeichnisstruktur. In einem nächsten Schritt werden die Overlaydatei und die Hintergrundbilddatei zusammen mit der Definitionsdatei, welcher die Verzeichnisstruktur enthält, auf den Produktionsrechner geladen. Bevorzugt enthält die Definitionsdatei pro Zeile die Information für die Erstellung eines Tickets, einen Hinweis oder Verweis auf die Overlaybilddatei und die Hintergrundbilddatei. Die Gesamtdatei oder Definitionsdatei für ein Ticketjob von 3.000 Tickets kann beispielsweise 9.000 Zeilen umfassen. Bevorzugt wertet der Produktionsrechner die Zeilen der Definitionsdatei aus, wobei der Produktionsrechner weiter bevorzugt die Hintergrundbilddatei und die Overlaydatei lädt. Ferner erzeugt der Produktionsrechner weiter bevorzugt pro Zeile aus beiden Bildelementen ein gemeinsames Bild.

In einer besonders vorteilhaften Weiterbildung wird die Schrift aus der Overlaydatei bei Vorliegen eines dunklen Hintergrundbildes oder bei Vorliegen von dunklen Bereichen eines Hintergrundbildes zumindest lokal invertiert dargestellt, das heißt, das Ticketmaterial, d. h. der Informationsträger, welcher normalerweise aus weißem Papier besteht, wird in dem Bereich nicht bedruckt. Insbesondere findet bevorzugt kein weißer Druck statt. Demzufolge erzeugt das tatsächliche Ticketmaterial, also das weiße Papier, die Schrift, da die Bereiche um die Schriftzeichen herum bedruckt sind.

Bei einem hellen Hintergrundbild wird die Schrift aus der Overlaydatei schwarz (CMYK) gedruckt. Es ist somit in vorteilhafter Weise möglich, dass Tickets variabel mit wechselnden Informationen, welche insbesondere in der Overlaydatei hinterlegt sind, und Hintergrundbildern bedruckt werden. Während des Bearbeitens beziehungsweise des Druckens eines Druckjobs wird insbesondere im selben Zeitraum eine neue Definitionsdatei bearbeitet und entsprechend werden die Overlaybilder und Hintergrundbilder zu einem jeweiligen Gesamtbild erstellt und/oder zusammengeführt. Ferner können, bevorzugt parallel und/oder gleichzeitig zum Druckvorgang, bearbeitete Druckjobs, insbesondere bereits gedruckte Elemente, innerhalb der Verzeichnisse verschoben und/oder gelöscht und/oder umbenannt werden. Insbesondere können Overlaybilder, Hintergrundbilder und/oder Definitionsdateien innerhalb der Verzeichnisse verschoben oder gelöscht oder umbenannt werden.
Die Abarbeitung des Druckvorganges erfolgt innerhalb des Druckrechners und /oder des Produktionsrechners nach folgenden Prioritäten. Priorität 1 (Prio 1) = Drucken, Priorität 2 (Prio 2) = neue Definitionsdatei bearbeiten und zu druckende Bilder erstellen, Priorität 3 (Prio 3) = abgearbeitete Bilder beziehungsweise bereits gedruckte Bilder, verschieben oder löschen oder umbenennen. Auch ist es möglich, dass gedruckte Bilddateien umbenannt werden, sodass diese als bearbeitet gekennzeichnet sind. Weiter ist es bevorzugt, dass ein zweites Bearbeiten derselben Definitionsdatei zu einem Hinweis beziehungsweise einer Stopmeldung führt, welche nur mittels vordefinierter beziehungsweise gesetzter Rechte aufgehoben werden kann. Der Hinweis beziehungsweise die Stopmeldung verhindern vorteilhafterweise ein doppeltes Erstellen von Tickets beziehungsweise ein doppeltes Erstellen von Tickets ist nur für autorisierte Personen möglich. So kann in dieser Art und Weise ein gewollter Nachdruck zugelassen werden.

In einer weiter bevorzugten Ausführungsform des Verfahrens kann direkt nach Bestellung eine Definitionsdatei für die Kundenbestellung erzeugt werden und ein Ticket gedruckt werden. Dadurch würde der gesamte beschriebene Prozess in Echtzeit durchgeführt werden, sodass ein Echtzeitverfahren vorliegt. Zur Durchführung eines Echtzeitverfahrens könnte beispielsweise auf die Prüfungs- und Selektionsverfahren zwischen Bestellung und Aufnahme in die Datenbank übersprungen beziehungsweise weggelassen werden.

Erfindungsgemäß umfasst das Verfahren als zusätzlichen Aspekt das datenbankgestützte Kuvertieren. In vorteilhafter Weise können bei dem vorstehend beschriebenen Vorgang der Ticketbestellung und der daraus resultierenden Overlaydatei mit Bezug zum Hintergrundbild, welche dann gemeinsam als ein Bild auf das Ticket gedruckt werden, weitere Daten in der Datenbank zur Verfügung stehen, welche als eine Steuerdatei bereitgestellt werden kann.

Ein Auszug aus der Steuerdatei könnte beispielsweise folgende Daten in folgendem Format aufweisen:
0000136867,0001,000000000000036683632301,0417063168010150,04,01,0,0 ,0,0,0,0,0,0,0,0,0,F,016028917600230050222900,366836323,128634767

Die Steuerdatei kann eine weitere separate und/oder eigenständige Datei sein, jedoch ist es auch möglich, dass die Steuerdatei Teil der Definitionsdatei ist beziehungsweise, dass die Daten der Steuerdatei zusätzlich zu den Informationen für die Erstellung eines Tickets in die Definitionsdatei aufgenommen werden. Die Steuerdatei, beziehungsweise die um die weiteren Daten der Datenbank ergänzte Definitionsdatei, wird genutzt beziehungsweise wird generiert, um einen separaten Lieferscheindruck, das heißt ein Anschreiben inklusive
postalischer Adresse zum Kuvertieren und Versenden der Tickets, zu drucken. Bevorzugterweise ist hierfür der Druck einer DIN4-Seite pro Auftrag auf einem Einzelblattdrucksystem vorgesehen. Bevorzugt kann es sich hierbei um einen separaten Prozess handeln. Ferner ist es in vorteilhafter Weise möglich, durch die Steuerdatei die in zwei verschiedenen physischen Eingabekanälen zugeführten Dokumente, wobei der erste physische Eingabekanal den Lieferschein umfasst und wobei der zweite physische Eingabekanal die zum Lieferschein gehörigen Tickets umfasst, richtig zusammenzuführen und die mit einer Leseeinrichtung gelesenen Daten abzugleichen. Die Leseeinrichtung kann dabei ein Barcodeleser sein und die gelesenen Dateien können in einem Barcode, insbesondere auf den Tickets, codiert sein.

Das Ticket kann beispielsweise nur einen ZKS-Code (Zugangskontrollcode) und/oder einen zusätzlichen Ticket-ID-Barcode umfassen. Der ZKS-Code und/oder der Ticket-ID-Barcode können insbesondere auf das Ticket aufgedruckt sein.

Der Code und/oder beide Codes werden gelesen und dann jeweils mit dem entsprechenden Eintrag in der Steuerdatei abgeglichen. Der Ticket-ID-Code ist immer in der Steuerdatei verifizierbar und vorhanden, der ZKS-Code ist bei Tickets, welche sowohl einen Ticket-ID-Code und einen ZKS-Code enthalten, nicht immer in der Steuerdatei vorhanden. Bevorzugt vergleicht das System den gelesenen Ticket-ID-Barcode mit den entsprechenden Daten, welche in der Steuerdatei abgespeichert sind. Bei Richtigkeit, beziehungsweise bei Übereinstimmung der gelesenen Daten mit den in der Steuerdatei gespeicherten Informationen wird die Steuerdatei bevorzugt mit der gelesenen Information aus dem ZKS-Code ergänzt und/oder überschrieben.

In einem weiteren Schritt nach der physischen Zusammenführung der Tickets, insbesondere nach dem Sortierungsschritt, wobei gegebenenfalls mehrere Tickets pro Sendung und/oder pro zu versendendem Kuvert mit dem jeweiligen Lieferschein zusammengeführt werden, werden die Informationen zusammengeführt und bei Ausgabe aus dem Kuvertiersystem als fertige Sendung mit einem Zeitstempel versehen. Weiter bevorzugt wird die vom System bearbeitete Steuerdatei zurückübergeben und der Vorgang wird abgeschlossen. Bevorzugt umfasst die Steuerdatei den zur Sendung zugeordneten Zeitstempel.

Der Auszug aus der Steuerdatei könnte bspw. nach dem Kuvertieren folgendermaßen aussehen:
0000136867,0001,000000000000036683632 301,0417063168010150,04,01,0,0 ,0,0,0,0,0,0,0,0,0,5,08:21:04,17/10/2013

Zur Identifikation der zu verarbeitenden Veranstaltungstickets stehen zweckmäßig zwei Barcode-Varianten zur Verfügung. Bevorzugt wird die Ticket-ID beziehungsweise der Ticket-ID-Barcode, auch Barcode 1 genannt, genutzt. Durch eine Umstellung im Ticketlayout kann es vorkommen, dass Tickets ohne Ticket-ID beziehungsweise Ticket-ID-Barcode verarbeitet werden müssen. Vorteilhafterweise ist für diesen Fall ein zweiter Barcode, der ZKS-Barcode, auch Barcode 2 genannt, zur eindeutigen Zuordnung des zu verarbeitenden Tickets vorgesehen. Um Ticket-ID und/oder ZKS-Barcode eindeutig verifizieren zu können, ist eine Anpassung der Steuerdatei notwendig.

In der Steuerdatei können Informationen folgend abgelegt sein:
a) Die zur Verarbeitung notwendigen Informationen zur Ticket-ID befinden sich in Spalte 3 der Steuerdatei, und/oder
b) Die zur Verarbeitung notwenigen Informationen zum ZKS-Barcode befinden sich in Spalte 19 der Steuerdatei.

Ferner muss vorzugsweise für eine Verifizierung der Barcodes im Schneideautomat ein weiterer Barcodelesekopf nachgerüstet werden. Auch müssen die zur Verifizierung notwendigen Informationen an benannten Stellen in der Steuerdatei wiederfindbar sein. Ein erster Lesekopf (Lesekopf 1) wird auf die Verarbeitung der Ticket-ID beziehungsweise des Ticket-ID-Barcodes eingerichtet, ein zweiter Lesekopf (Lesekopf 2) auf die Verarbeitung des ZKS-Barcodes. Wird durch den Lesekopf 1 eine Ticket-ID gelesen, wird diese bevorzugt mit der Information aus der Steuerdatei, insbesondere Spalte 3 der Steuerdatei, verglichen. Ist keine Ticket-ID lesbar, so wird der ZKS-Barcode gelesen und mit der Information aus der Steuerdatei, insbesondere Spalte 19 der Steuerdatei, verglichen. Wenn keine der beiden Barcode-Informationen lesbar ist und/oder korrekt verifiziert werden kann, wird das Ticket mit einem Lesefehler, durch Aussteuern den Kuvertierprozess, zur manuellen Nachkontrolle entzogen.

Die nachfolgende Tabelle definiert den bevorzugten Aufbau der Steuerungsdatei. Dabei beschreibt die Spalte "Datenfeld" genau eine Zeile der Datei. Die einzelnen Felder sind durch Komma getrennt.

| Datenfeld | Beschreibung |
|---|---|
| Jobnummer | 6-stellige Nummer mit führenden Nullen; beginnt bei 1 |
| Zeilennummer | Zeilennummer innerhalb der Steuerungsdatei 4-stellige Nummer mit führenden Nullen; beginnt bei 1 |
| Ticket [Kanal 2] | Ticket-ID, 24-stellig, wir mit führenden Nullen aufgefüllt |
| DIN A4 Einzelblatt [Kanal 1] | 16-stellige Nummer, die aus den folgenden Teilen besteht: |
| | 1 - 12 Ordernummer |
| | 13 -14 Zähler, der die fortlaufenden Blätter innerhalb eines Kuvertierjobs kennzeichnet. Das Folgeblatt hat einen um Eins höheren Wert als sein Vorgänger. Der Zähler läuft wiederholt von 01-99. |
| | 15 Gibt an, um welches Lieferscheinblatt es sich handelt |
| | 0 - laufendes |
| | 1 - Gruppenende |
| | 2 - Trailer Bit (Leerfahren) |
| | 4 - Header Bit (OMR-Stopp) |
| | z. B. 3 = Gruppenende und Leerfahren |
| | 16 Reserve: 0 |
| Anzahl Tickets der Gruppe | Betrachtet die zu dem Ticket zugehörige Gruppe; gibt die Gesamtanzahl der Tickets innerhalb der Gruppe an 2-stellige Nummer mit führender Null |
| Summe Einzelblätter der Gruppe | Betrachtet die zu dem Ticket zugehörige Gruppe; gibt die Summe der Einzelblätter für die Gruppe an; Beilagen bleiben unberücksichtigt |
| | 2-stellige Nummer mit führender Null |
| Gruppenende? | Ist das Ticket das letzte seiner Gruppe? |
| Mit Beilage1? | 1 für ja, 0 für nein |
| Mit Beilage2? | 1 für ja, 0 für nein |
| Mit Beilage3? | 1 für ja, 0 für nein |
| Mit Beilage4? | 1 für ja, 0 für nein |
| Ticketaussteuerung? | Soll das Ticket nach dem Schneiden ausgesteuert werden? |
| | 1 für ja, 0 für nein |
| Gruppenaussteuerung? | Soll die gesamte Gruppe ausgesteuert werden? 1 für ja, 0 für nein |
| Leerfahren Kanal 2 und Anlage? | 1 für ja, 0 für nein |
| Stopp beim Schneiden? | Soll die Maschine anhalten, wenn das Ticket die Schneidevorrichtung erreicht hat? |
| Batch kicker | Ablage der Kuverts auf dem Band |
| | 1 = versetzt zur vorherigen Lage, 0 = für keine Änderung |
| Reserve | 0 |
| Kuvertierstatus | Status zu dem Ticket nach Kuvertierlauf. |
| | Dieses Feld wird von der Kuvertiermaschine überschrieben; initial steht hier ein F. |
| Ticket (alternativ) Kanal 2] | ZKS-Code, 24-stellig, wir mit führenden Nullen aufgefüllt (Code 128) |
| Weitere Felder | Informationen zur Ansteuerung der Ticketdrucker |

Folgend ist in einem Beispiel der Inhalt der Steuerdatei vor und nach dem Kuvertieren dargestellt.

Steuerdatei vor dem Kuvertieren:
0000136867,0001,000000000000036683632 301,0417063168010150,04,01,0,0 ,0,0,0,0,0,0,0,0,0,F,016028917600230050222900,366836323,128634767,
0000136867,0002,000000000000036683632201,0417063168010150,04,01,0,0 ,0,0,0,0,0,0,0,0,0,F,016028917600130050222900,366836322,128634767,
0000136867,0003,000000000000036683624301,0417063168010150,04,01,0,0 ,0,0,0,0,0,0,0,0,0,F,016028914000195000222900,366836243,128634767,
0000136867,0004,000000000000036683624401,0417063168010150,04,01,1,0 ,1,0,0,0,0,0,0,0,0,F,016028914000295000222900,366836244,128634767
0000136867,0005,000000000000036683934001,0417064352010210,02,01,0,0 ,0,0,0,0,0,0,0,0,0,F,016029044500190540222900,366839340,128636064,
0000136867,0006,000000000000036683934101,0417064352010210,02,01,1,0 1,0,0,0,0,0,0,0,0,F,016029044500290540222900,366839341,128636064
0000136867,0007,000000000000036684038701,0417064716010310,02,01,0,0 ,0,0,0,0,0,0,0,0,0,F,016029085300111060222900,366840387,128636465,
0000136867,0008,000000000000036684038601,0417064716010310,02,01,1,0 1,0,0,0,0,0,0,0,0,F,016029085300211060222900,366840386,128636465
0000136867,0009,000000000000036684077001,0417064734010410,04,01,0,0 ,0,0,0,0,0,0,0,0,0,F,016029099900190410222900,366840770,128636595,
0000136867,0010,000000000000036684076901,0417064734010410,04,01,0,0 ,0,0,0,0,0,0,0,0,0,F,016029099900290410222900,366840769,128636595,

Steuerdatei nach dem Kuvertieren:
0000136867,0001,000000000000036683632 301,0417063168010150,04,01,0,0 ,0,0,0,0,0,0,0,0,0,5,08:21:04,17/10/2013
0000136867,0002,000000000000036683632201,0417063168010150,04,01,0,0 ,0,0,0,0,0,0,0,0,0,5,08:21:04,17/10/2013
0000136867,0003,000000000000036683624301,0417063168010150,04,01,0,0 ,0,0,0,0,0,0,0,0,0,5,08:21:04,17/10/2013
0000136867,0004,000000000000036683624401,0417063168010150,04,01,1,0 ,1,0,0,0,0,0,0,0,0,5,08:21:04,17/10/2013
0000136867,0005,000000000000036683934001,0417064352010210,02,01,0,0 ,0,0,0,0,0,0,0,0,0,0,08:21:05,17/10/2013
0000136867,0006,000000000000036683934101,0417064352010210,02,01,1,0 ,1,0,0,0,0,0,0,0,0,0,08:21:05,17/10/2013
0000136867,0007,000000000000036684038701,0417064716010310,02,01,0,0 ,0,0,0,0,0,0,0,0,0,0,08:21:06,17/10/2013
0000136867,0008,000000000000036684038601,0417064716010310,02,01,1,0 ,1,0,0,0,0,0,0,0,0,0,08:21:06,17/10/2013
0000136867,0009,000000000000036684077001,0417064734010410,04,01,0,0 ,0,0,0,0,0,0,0,0,0,0,08:21:07,17/10/2013
0000136867,0010,000000000000036684076901,0417064 734010410,04,01,0,0 ,0,0,0,0,0,0,0,0,0,0,08:21:07,17/10/2013

Die vorliegende Erfindung eröffnet eine Reihe von Vorteilen, die sich aus dem Studium der nachfolgenden Beschreibung erschließen. Als bedeutendster Vorteil sei angeführt, dass durch die referenzierende Verarbeitung und -druck der Informationsträger eine Steigerung im Durchsatz der Informationsträger erzielt wird. Außerdem handelt sich um eine komplett neue Art der Verarbeitung. Deshalb besteht kundenseitig (d.h. bei dem Bereitsteller der zu druckenden Informationen) Flexibilität.

### Kurze Beschreibung der Zeichnungen

Nachfolgend werden eine bevorzugte Ausführungsform sowie einige Teilaspekte der Erfindung anhand der Zeichnung näher beschrieben. Es zeigen:
Fig. 1 eine schematische Darstellung eines erfindungsgemäßen Systems in einem ersten Aspekt;
Fig. 2A eine Seitenansicht eines Implementierungsbeispiels des erfindungsgemäßen Systems;
Fig. 2B eine perspektivische Ansicht eines Implementierungsbeispiels des erfindungsgemäßen Systems;
Fig. 2C eine weitere perspektivische Ansicht eines Implementierungsbeispiels des erfindungsgemäßen Systems;
Fig. 3 prinzipiell die Funktionsweise des erfindungsgemäßen Systems;
Fig. 4 einen bedruckten Informationsträger, der das erfindungsgemäße System durchlaufen hat; und
Fig. 5 einen Verfahrensaspekt der erfindungsgemäßen Vorrichtung.

### Bevorzugte Ausführungsform der Erfindung

Zu Beginn sei ausgeführt, dass nachfolgende Komponenten der erfindungsgemäßen Vorrichtung manchmal mit ihrer technischen Implementierung (z. B. Atlantik Zeiser™ Echtzeitcontroller oder Gamma 70 Farbdrucker) und manchmal mit ihrer allgemeinen Form (z. B. Prozessor oder Druckvorrichtung) bezeichnet werden. Dies schränkt jedoch die allgemeine Form nicht auf die konkrete technische Implementierung ein, sondern stellt jeweils lediglich ein Ausführungsbeispiel dar; dies gilt ebenso für konkrete Zahlenwerte und -angaben: solange diese nicht technisch notwendig sind, stellen auch sie lediglich ein Ausführungsbeispiel dar.

Des Weiteren sei darauf hingewiesen, dass die Verwendung des Begriffs "Prozessor", wie in der Prozessortechnik üblich, die allgemeinste Form einer Steuervorrichtung bezeichnet; dies schränkt die Erfindung auf keine Implementierung oder Baustein(e) ein, die zur Realisierung des "Prozessors" herangezogen wird (werden).

Außerdem sei darauf hingewiesen, dass der Begriff "Echtzeitsystem" nicht voraussetzt, dass die Speicherschritte/-vorgänge einerseits und die Schritte/Vorgänge des Holens bis Abwartens andererseits notwendigerweise sukzessive in Echtzeit ablaufen. Insbesondere die Speicherschritte können in einem eigenen Echtzeitschritt oder offline vorbereitend ausgestaltet sein. In einem nicht einschränkenden Beispiel kann der Kunde eine Veranstaltung im Web Shop im Vorfeld buchen; es ist nicht erforderlich, dass sofort im Anschluss vollautomatisch eine (farbige) Eintrittskarte gedruckt wird. Die Web Shop Bestellungen des Auftraggebers fallen aber in einem gegebenen Zeitrahmen an, d. h. es wird der Satz von Informationen (bzw. die Vordergrundbilddatei) in Batchläufen unmittelbar nach Bestelleingang innerhalb eines Zweischichtbetriebs verarbeitet. Diese Zusammenstellung der Druckjobs ermöglicht auch durch diverse vorgelagerte Selektionsverfahren, die in einem Vorsystem generiert werden, eine besondere Priorisierung des Druckvorgangs einzelner Tickets, z. B. für den Express-Versand oder den Auslandsversand. Die Zusammenstellung des Satzes von Informationen kann somit in einem eigenen Echtzeitschritt erfolgen (es ist z.B. möglich, den Kundenwunsch nach einem bestimmten Sitzplatz online abzugleichen und die entsprechende Vordergrundbilddatei online zu erzeugen) oder kann vollständig offline erfolgen (es ist z. B. in einem Altsystem auch möglich, den Kundenwunsch nach einem bestimmten Sitzplatz zunächst lediglich aufzuzeichnen, und in einem zweiten Schritt die Kundenwünsche z. B. manuell mit dem verfügbaren Sitzplatzkontingent abzugleichen und demgemäß die Vordergrundbilddatei zu erzeugen).

Zur Vereinfachung werden folgende Abkürzungen eingeführt:
ADU Application Device Unit
Software-Einheit, welche ein Gerät innerhalb des (AZ-) Controllers steuert.
AZ ATLANTIC ZEISER™
BLS Base Link System
Echtzeitrechner innerhalb des AZ-Controllers.
CRLF Carriage Return Line Feed
Wird in Produktionsdatendateien und Log-Dateien verwendet, um das Ende eines Eintrags (Record oder Satz von Elementen) anzuzeigen
CSV Comma Separated Value

In Spalten strukturierte ASCII-Daten, durch Semikolons getrennt. Jede Zeile (entspricht 1 Record) wird mit CRLF beendet.

Jede Spalte enthält jeweils stets die identische Anzahl von Zeichen.
FAT Factory Acceptance Test
LAN Local Area Network
SAT Site Acceptance Test
USV Unterbrechungsfreie Stromversorgung
VAR Value Added Reseller
ERP Enterprise Resource Planning (Software)

Des Weiteren werden zur Vereinfachung der Beschreibung folgende Randbedingungen definiert, die allesamt lediglich nicht-einschränkende Ausführungsbeispiele der Erfindung darstellen:
(1) Es können mehrere Ausführungen/Bedruckungen des Rohmaterials (Informationsträger) vorhanden sein.
(2) Eine Stapelgröße von vorzugsweise 3000 bis 4500 Einzelprodukten ist so definiert, weil diese Größe für die Handhabung noch geeignet ist.
(3) Dem Bediener an der Maschine steht vorzugsweise eine nicht limitierte Menge von Rohmaterial zur Verfügung.
(4) Es gibt den Fall, dass ein Besteller mehrere Tickets von einer oder/und unterschiedlichen Veranstaltungen bucht und diese Tickets dann in einem Kuvert versendet werden. Deshalb ist die In-Line Nachproduktion nicht bevorzugt, da das zu einem Problem beim Kuvertieren (richtige Zuordnung und Reihenfolge pro Kuvert) führt. Es wird vorzugsweise "strictly in sequence" produziert. Über eine Steuerdatei sind in einem Barcode das "Gruppen-Ende" und eine Kundennummer für die Gruppe codiert (vorzugsweise in der Sequenz von Elementen). Über diesen Code wird der Kuvertierer gesteuert.
(5) Der Endkunde betreibt eine selbst erstellte Datenbank in der vorzugsweise alle Geschäftsprozesse (Anforderungen, Veranstalter, Bestellungen, Abrechnungen, Web-Interface,...) abgebildet sind.
(6) Von dem Datenbank-System des Kunden aus werden aktuell ThermoTransfer Drucker angesteuert, die nur in schwarzer Farbe, Texte, Logos und Barcodes drucken.

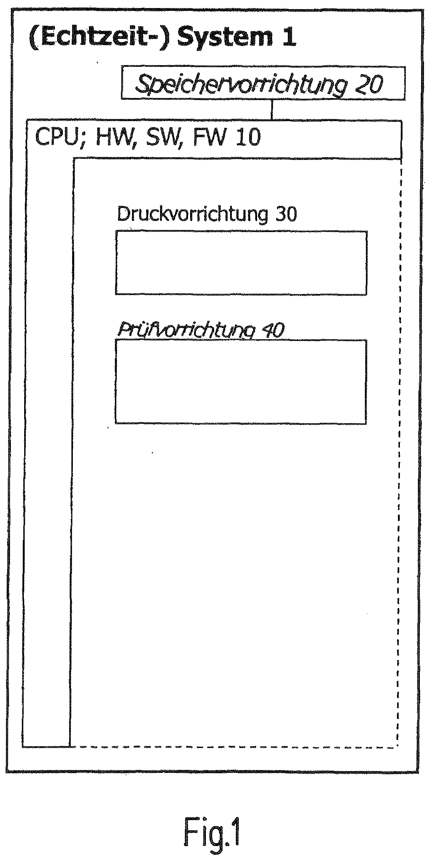

Fig. 1 zeigt eine schematische Darstellung eines erfindungsgemäßen Systems 1 in einem ersten Aspekt. Das erfindungsgemäße System 1 umfasst einen Prozessor (CPU; HW, SW, FW) 10 und eine Speichervorrichtung 20. Des Weiteren umfasst das System 1 eine Druckvorrichtung 30 und eine optionale Prüfvorrichtung 40.

Wie durch die gestrichelte Erweiterung des Prozessors 10 angedeutet, unterliegen die Druckvorrichtung 30 und die Prüfvorrichtung 40 der Steuerung durch den Prozessor 10.

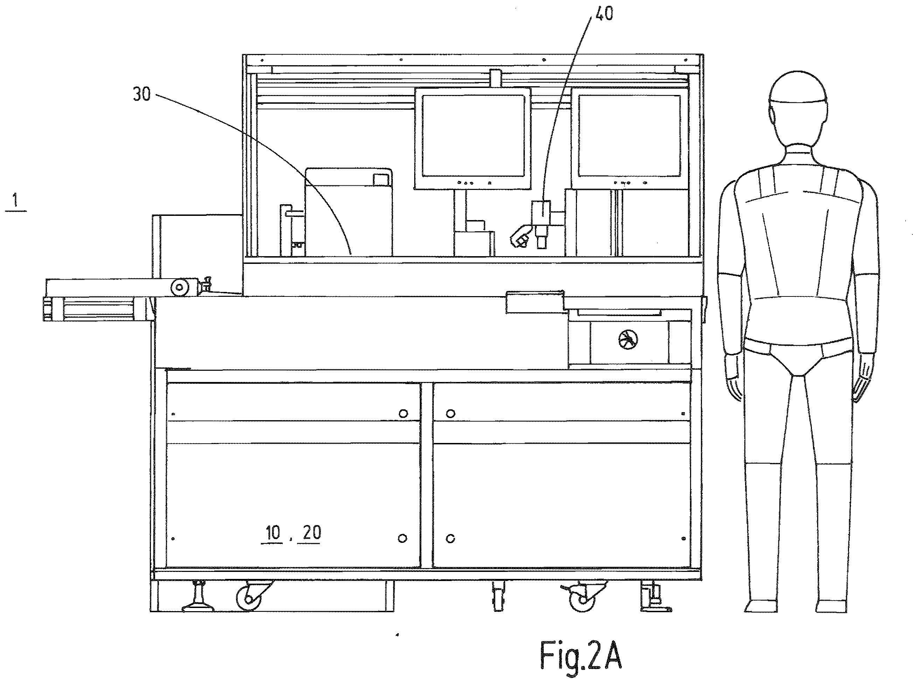

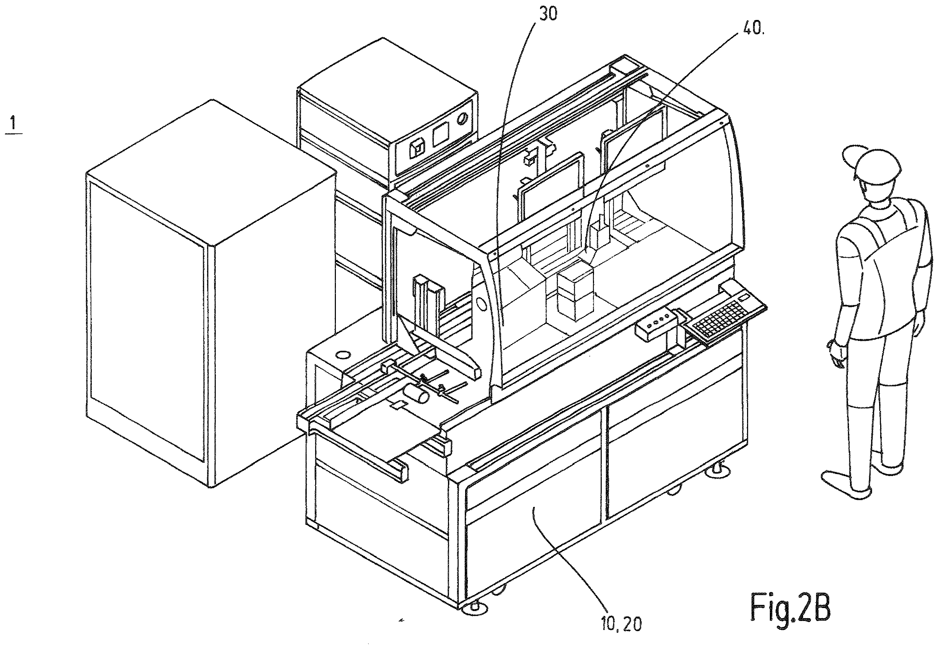

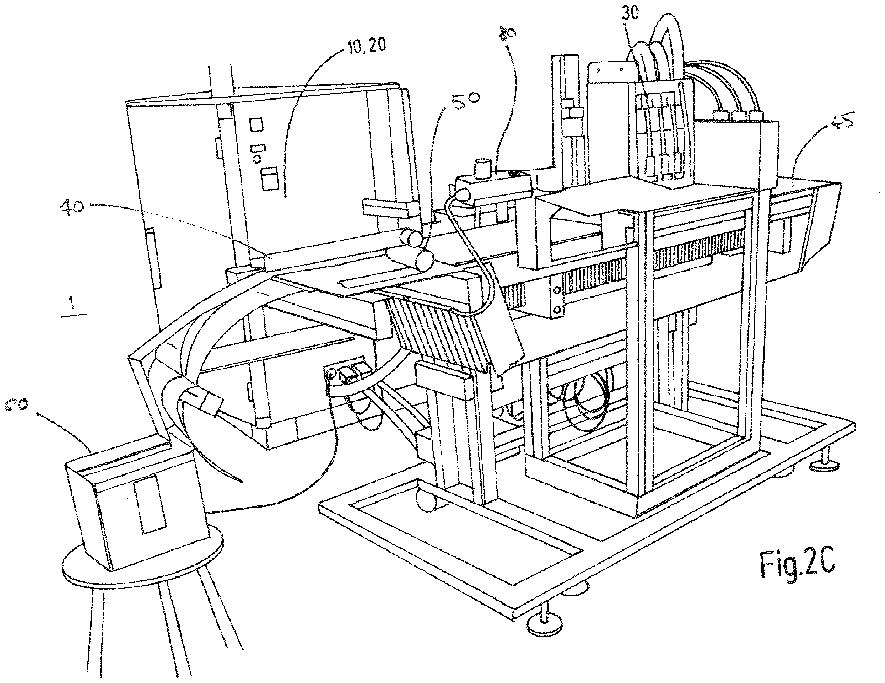

Fig. 2A zeigt eine Seitenansicht eines Implementierungsbeispiels des erfindungsgemäßen Systems 1, Fig. 2B zeigt eine perspektivische Ansicht eines Implementierungsbeispiels des erfindungsgemäßen Systems 1, und Fig. 2C zeigt eine weitere perspektivische Ansicht eines Implementierungsbeispiels des erfindungsgemäßen Systems 1. Das erfindungsgemäße System 1 weist einen Prozessor 10 und eine Speichervorrichtung 20 auf. Prozessor 10 und Speichervorrichtung 20 sind im in den Figuren 2A und 2B gezeigten Implementierungsbeispiel im unteren Bereich und innerhalb des Systems angeordnet. Im Implementierungsbeispiel der Figur 2C hingegen, sind Prozessor 10 und Speichervorrichtung 20 in einem separaten Schaltschrank angeordnet. Ferner sind in den Figuren 2A, 2B und 2C eine Druckvorrichtung 30 sowie eine Prüfvorrichtung 40 dargestellt, wobei wie in Figur 2C gezeigt die Prüfvorrichtung 40 auch entfallen kann.

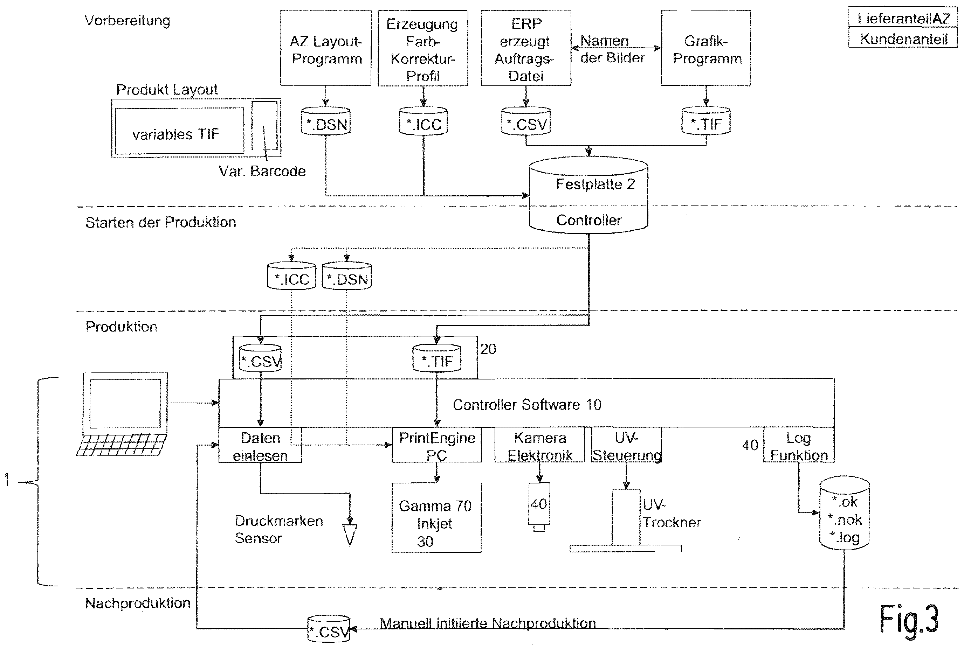

Außerdem zeigt Fig. 3 prinzipiell die Funktionsweise des erfindungsgemäßen Systems 1.

Im Folgenden sind sowohl beanspruchte als auch optionale Systemkomponenten gleichberechtigt aufgeführt und beschrieben. Dies bedeutet jedoch nicht, dass die optionalen Komponenten als erfindungswesentlich zu betrachten sind.

### ERP

Wie in Fig. 3 gezeigt, erzeugt das ERP-System 1 gemäß eingegangener Bestellungen die Datei (Sequenz von Elementen), die der Druckmaschine 30 zugeführt wird. Die Bilddaten (Informationssatz) werden vorzugsweise über einen manuellen Prozess erzeugt, der im ERP verfolgt wird.

Die Bilddaten und die Datei werden vom ERP-System 1 vorzugsweise auf die Festplatte (externe Quelle) 2 der Druckmaschine(n) 30 übertragen. Vorzugsweise wird für eine geringe Übertragungsdauer wird eine GBIT-LAN-Verbindung verwendet. Das Dateiformat wird nachstehend beschrieben.

Während der Produktion werden die Bilddateien vorzugsweise im TIF-Format und die Auftragsdatei vorzugsweise im CSV-Format auf der Speichervorrichtung 20 des Systems 1 zwischengespeichert. Eine Controller Software des Prozessors 10 liest die Daten der Bilddateien und der Auftragsdatei ein und weist die Druckvorrichtung 30, insbesondere einen Gamma 70 Inkjet-Drucker, an, die Produkte 100 zu drucken. Ferner steuert die Controller-Software des Prozessors 10 eine Kameraelektronik der Prüfvorrichtung 40 sowie eine UV-Steuerung eines UV-Trockners zur Trocknung der gedruckten Produkte 100. Als weitere Funktion weist die Prüfvorrichtung 40 eine Log-Funktion auf, welche für die Produktion Log-Dateien bevorzugt im ASCII-Format mit den Endungen .ok, .nok, .log erstellt. Nach Auswertung der Log-Dateien kann eine Nachproduktion manuell initiiert werden.

Nach der Verarbeitung auf der Druckmaschine 30 wird vorzugsweise ein Produktionsprotokoll für das ERP benötigt, mit dem gegen die Beauftragung verglichen wird.

### Schneide- und Kuvertiermaschine

Vorzugsweise mehrere Barcodeleser im Kuvertiersystem erfassen den Barcode und vergleichen diesen gegen eine Vorgabedatei des ERP. Alle Barcodes, die nicht Teil der Vorgabedatei sind, werden - wie auch unleserliche Barcodes - vorzugsweise als schlecht ausgeschleust und gelangen nicht in die (nicht gezeigte) Kuvertiermaschine.

### Präzisions-Transportband

Wie in Fig. 2C gezeigt, verbindet das Transportband 45 die Komponenten des Systems 1 und weist vorzugsweise folgende, nicht-einschränkende Merkmale auf:
(1) Eignung für den Transport von Produkten 100 für farbliche Bedruckung "Process Colour"
(2) Auflagerollen 50 für das Plätten der Falze
(3) Radien am Eingang und Ausgang für Einzug und Abstapelung
(4) Behälter 60 für die Produkte 100 am Eingang und Ausgang
(5) Ausrichtkante 70 zur Führung der Produkte 100
(6) Produktsensor 80 am Eingang
(7) Abdeckhauben ohne Sicherheitsschalter. Die Abdeckhauben sind nach vorne hin und an den Seiten geschlossen.
(8) Geschwindigkeit ist manuell vorzugsweise von 10 m/min bis 24 m/min einstellbar
(9) Die Arbeitshöhe des Transportbandes 45 beträgt vorzugsweise 1024 mm
(10) Die Maschine läuft vorzugsweise von links nach rechts

### lonisier-Einheit

Die lonisier-Einheit dient vorzugsweise für die statische Entladung der Produkte 100 und für ein besseres Druckergebnis und ggf. geringeren Reinigungsaufwand.

### Gamma 70 Farbdrucker (als Beispiel der Druckvorrichtung 30)

| | |
|---|---|
| Druckbreite | 70 mm |
| Druckgeschwindigkeit | max. 24 m/min |
| Auflösung | 360 x 360 dpi |
| Tintenfarben | YMCK (Yellow, Magenta, Cyan, Black) |
| Umgebungstemperatur | 20°C - 30°C |
| Minimum Fontgröße | 4 pt (DIN 16507-2) / 1 mm |
| Layout Abstand | min. 2 mm |
| Abstand Druckkopf zu Produkt | 0,5 - 2 mm |
| Umgebungstemperatur | 15 - 40°C |
| Luftfeuchtigkeit | 10 - 60% nicht kondensierend |
| Maximale Höhe über dem Meeresspiegel | 2000 m |

Die Kopfhalterung des Druckers erlaubt:
- Druckkopf-Justage-Möglichkeit zum Anheben des Druckkopfes für die Reinigung. Fehlt eine Düsenausgabe im Druckbild, dann wird vorzugsweise eine manuelle Reinigung durchgeführt.

### SmartCure UV-Trockner

| | |
|---|---|
| Trocknungsbreite | max. 75 mm |
| Trocknungsleistung | 4, bzw. 8 W/cm² |
| Wellenlänge | 380 - 420 nm (UV-A) |
| Abstand Trockner zu Produkt | 1 - 5 mm |
| Umgebungstemperatur | 15 - 40°C |
| Luftfeuchtigkeit | 10 - 90% nicht kondensierend |

Der UV-Trockner ist vorzugsweise mit einem Kühlgerät und Ansteuerung ausgestattet, welche z. B. neben der Transportmaschine aufgestellt werden.

### Kamera 40 (als Beispiel der Prüfvorrichtung 40)

Die Kamera 40 umfasst vorzugsweise eine Beleuchtung, Halterung, AuswerteElektronik und Software und Kontroll-Bildschirm für die Rücklesung des Barcodes oder ggf. der Klarschriftziffer.

Maximales Sichtfeld der Kamera 40 = 53 mm x 85 mm.

Für das nachstehend beschriebene Layout können die Barcodes über Sub-Trigger gelesen werden. Sollten sich die Barcodes, oder Barcodeanordnungen (Layout Definition) ändern, so werden vorzugsweise für diese Änderung auch ein neuer Kamera-Job und Position eingerichtet, das gilt auch für entsprechende Nachverarbeitungssysteme (wie z.B. Lesung an der Schneidemaschine).

### Schaltschrank / Hardware

Der Schaltschrank umfasst vorzugsweise einen Bildschirm mit Tastatur und Mausfunktion am Transport-Tisch.

Die Controller-Hardware steht vorzugsweise frei neben dem Gehäuse des Farbdruckers 30 und umfasst vorzugsweise:
(1) Eine separate LAN-Karte zur Einbindung des Systems 1 in ein externes LAN
(2) Backup (Acronis™) Festplatte

Unter Bezugnahme auf Fig. 3 sind nachstehend insbesondere die verwendete Software und die verwendeten Formate beschrieben.

### Controller-Software

Wie in Fig. 3 gezeigt, weist die Software vorzugsweise folgende, nicht-einschränkende Merkmale auf:
(1) Die Druckposition kann am Controller 10 per Software im Bereich von +/- 5 mm vom Bediener in der Laufrichtung justiert werden.
(2) Die Controller Software kann 3 Typen von Logdateien erzeugen:
   a) alle Produkte 100, die von der Kamera 40 als ok bewertet wurden (*.ok)
   b) alle Produkte 100, die von der Kamera 40 als nicht OK (nok) bewertet wurden (*.nok)
   c) alle Produkte 100, die von der Kamera 40 als ok und nok bewertet wurden (*.log)

### Layout Software für die Druckvorrichtung 30 (z.B. Gamma 70)

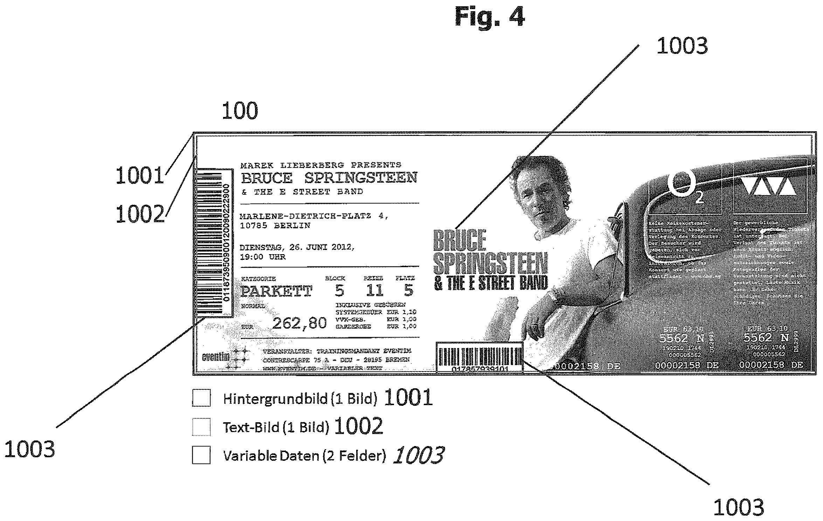

Die Layout-Software erlaubt die Definition einer Layout-Beschreibung. Für die Applikation sind vorzugsweise die folgenden Leistungsmerkmale von Bedeutung:
(1) Variables Hintergrundbild (nachstehend in Fig. 4 beschrieben, Bezugszeichen 1001)
(2) Variable Bilder / Text-Bild (nachstehend in Fig. 4 beschrieben, Bezugszeichen 1002)
(3) Variable Texte, die in verschiedenen Fonts und Fontgrößen dargestellt werden können
(4) Variable Felder, in denen ASCII-Information in einen Barcode z.B. 2/5 interleaved oder DataMatrix Code ECC200 dargestellt werden können.

Das Layout wird vorzugsweise vor Produktionsbeginn der Controllersoftware zur Verfügung gestellt. Während der Produktion werden die variablen Felder mit den Daten der CSV-Datei gefüllt und gedruckt.

### Funktionsablauf

### Arbeitsvorbereitung

In der Arbeitsvorbereitung wird vorzugsweise ein Layout (*.DSN) für die Einzelprodukte 100 eines Stapels definiert. Die CSV-Datei für einen Stapel wird generiert. Die benötigten Bilder für einen Stapel werden generiert und in vereinbarter Auflösung und Format abgelegt.

Die erzeugten Dateien werden auf die vereinbarten Verzeichnisse des Produktionsrechners kopiert.

### Start des Systems 1

Der Bediener schaltet die Anlage ein und reinigt den Farbdrucker 30 (optional).

Der Anfang eines Stapels (von Informationsträgern 100) wird in den physikalischen Transport eingelegt. Der Bediener wählt in der Software den Job (=vordefinierten Parametersatz). Es gibt vorzugsweise nur einen Job, da alle Produkte 100 gleich verarbeitet werden und vorzugsweise das gleiche Layout verwenden.

Die Controller-Software lädt das Layout und das Farbkorrekturprofil gemäß den im Job hinterlegten Definitionen. Dann wählt der Bediener eine CSV-Datei (Satz von Elementen; Referenzen) aus und bringt so die Controller-Software in Produktionsbereitschaft.

Der Bediener startet den physikalischen Transport. Der Start-Taster befindet sich vorzugsweise am Auslauf des Systems 1, so dass der Bediener den Anfang des Bandes richtig legen kann, ohne die Maschine zu stoppen. Ein Geschwindigkeitspotentiometer erlaubt vorzugsweise die Reduzierung der Anfahrtsgeschwindigkeit, falls das Einlegen bei voller Geschwindigkeit zu schwierig ist. Dieser Vorgang vermeidet einen Anschreibe-Versatz.

### Ungestörte Produktion

Die Produkte 100 (Informationsträger 100) werden aus dem Karton in den Transport gezogen. Bevor die Produkte 100 auf das Transportband 45 gelangen, wird vorzugsweise von unten eine (nicht gezeigte) Druckmarke erkannt. Die Produktbahn wird unter dem Drucker 30 hindurchgeführt. Die Controller-Software hat die Druckmarke erkannt und liest für jedes Produkt die in der CSV-Datei referenzierten Bilddateien ein und führt dem Farbdrucker 30 die zugehörigen produktvariablen Barcode und Klartext-Information zu.

Der Farbdrucker 30 druckt. Der nachfolgende UV-Trockner härtet die Tinte aus. Die Kamera 40 macht vorzugsweise eine Aufnahme des Barcodes und liefert ein Leseergebnis an den Controller ab. Die Kamera 40 verifiziert den Barcode als gut und deshalb läuft das System 1 normal weiter.

### Produktionsende

Wenn die CSV-Datei vollständig abgearbeitet ist, dann wird ein Maschinenhalt ausgelöst, sobald das letzte bedruckte Produkt 100 am Ausgang der Maschine angekommen ist.

Fig. 4 zeigt einen bedruckten Informationsträger 100, der das erfindungsgemäße System durchlaufen hat. Der Träger 100 umfasst ein Hintergrundbild 1001, das auf einer Hintergrundbilddatei beruht, ein Vordergrundbild ("Overlay") 1002, und optionale variable Daten 1003, wie Barcodes.

### Eigenschaften der unbearbeiteten Produkte 100 (als Beispiel der Informationsträger 100) Stapel

Stapel zu je 3000 oder 4500 Einzelprodukten 100 werden an der Maschine angelegt. Die Stapel bestehen vorzugsweise aus Z-gefalteten und perforierten Eintrittskarten (Informationsträgern 100) für Veranstaltungen. Die Perforation und Faltung befindet sich vorzugsweise auf den schmalen Seiten des Stapels.

Ein Stapel ist vorzugsweise ca. 300 mm hoch (bei 3000 Tickets 100 ca. 406 mm) und bei 4500 Tickets 100 ca. 609 mm lang. In einem Stapel zu 3000 Einzelprodukten 100 kann es vorkommen, dass die Perforation getrennt ist, und der Stapel aus 2 Teilstapel besteht.

### Einzelprodukt 100 (als Beispiel des Informationsträgers 100)

Die zu verarbeitenden Produkte 100 haben vorzugsweise die folgenden Eigenschaften:

| | |
|---|---|
| Breite, Länge | 82 mm x 203 mm (Laufrichtung) |
| Papiergewicht | 175 g/m² |
| Druckmarke | Schwarz in weißem Hintergrund 15 mm x 10 mm (Laufrichtung) auf der Rückseite der Einzelprodukte. Die Druckmarke ist vorzugsweise immer an derselben Position. Das Mindestmaß der Druckmarke beträgt vorzugsweise 8 mm x 8 mm. |
| Kontrast | Der Kontrast von Druckmarke und Hintergrunddruck ist vorzugsweise > 200 Graustufen bei einer Skala von 256. |
| Oberflächenspannung | Die Druckqualität ist vorzugsweise ohne Oberflächenbehandlung als gut einzustufen. |
| Hintergrunddruck auf der Vorderseite | Weiß |

### Produktionsinformation

### Produktionsmöglichkeit 1

Die Barcode-Informationen 1003 werden seitens des Informationsbereitstellers in das Overlay 1002 integriert. Anschließend wird die Druckqualität am Drucker 30 vorzugsweise so optimiert, dass die gewünschte Druckqualität auch für die Barcodes erreicht wird.

Alternativ werden die Barcode-Informationen 1003 separat geliefert und an festen Positionen (inkl. Varianzwert) hinzugefügt.

### Beispiel:

[Ticket]: 007054877401 (Identifikator)
[Background]: 0, 0, 0000005320{++}.tif (Hintergrundbilddatei 1001, Referenz)
[Textoverlay]: 0, 0, 0000005320{++}.tif (Vordergrundbilddatei 1002, Referenz)

### Produktionsmöglichkeit 2

Die Barcode-Informationen 1003 werden vorzugsweise gesondert geliefert und an variablen Positionen hinzugefügt.

Dateiformat der vom Informationsbereitsteller gelieferten Daten:
[Ticket] : <TicketID> (Identifikator)
[Barcode]: <Size>, <XPos>, <YPos>, <Typ>, <Rotation>, <Alignment>, <Barcode>
[Background]: <XPos>, <YPos>, <Filename> (Hintergrundbilddatei 1001, Referenz)
[Textoverlay]: <XPos>, <YPos>, <Filename> (Vordergrundbilddatei 1002, Referenz)
Die Steuerdatei wird pro Ticket 100 vorzugsweise bis zu 5 Zeilen umfassen, die Label "Ticket", "Background" (entfällt bei Standardtickets) und zwei Mal das Label Barcode einmal für den ZKS-Barcode und einmal für die TicketID.

### Beispiel:

[Ticket]: 007054877401 (Identifikator)
[Background]: 0, 0, 0000005320{++}.tif (Hintergrundbilddatei 1001, Referenz)
[Textoverlay]: 0, 0, 0000005320{++}.tif (Vordergrundbilddatei 1002, Referenz)
[Barcode]: 38, 90, 570, 0, 270, 4, 005240498600100050011000
[Barcode]: 38, 1130, 740, 2, 360, 8, 007054877401

Bei fehlemden Background wird vorzugsweise eine leere Default-Datei geschickt. Bei nicht vorhandenen Barcodes würde der vorzugsweise Barcode leer sein (z.B. "[Barcode]: 38, 1130, 740,,,,").

Die beiden Barcode Positionen innerhalb der Datei können pro Ticket 100 variieren, die Position der übrigen Felder wird mit der ersten Testdatei festgelegt. Die Datei ist eine Komma getrennte *.txt Datei (bzw. CSV-Datei).

Gemäß der Erfindung werden ein Hintergrundbild 1001, eine überlagertes Text-Bild und die Barcodes gedruckt. Dadurch können die Tickets entsprechend kreativ gestaltet werden.

Mit anderen Worten umfassen die Bilddaten zwei Bilddateien (Hintergrundbild 1001/Overlay 1002). Das Overlay 1002 setzt sich vorzugsweise aus beliebig vielen Elementen (z. B. Schrift, Zeichen, kleineren Bilddateien (Logos usw.)) zusammen und wird vorzugsweise extern vorab erstellt. Die Hintergrundbilddatei 1001 weist vorzugsweise bei gegebener Größe des Tickets 360 x 360 dpi Auflösung auf und ist ca. bis zu 12MB groß, wohingegen die Overlaybilddatei 1002 vorzugsweise ca. bis zu 6 MB groß ist. Das System 1 legt die beiden Bilddateien übereinander - erst Hintergrund 1001 dann Overlay 1002 - und druckt dann das entstehende Gesamtbild.

Die Definitionsdatei bzw. Steuerdatei enthält somit vorzugsweise pro Zeile die Information für die Erstellung eines Tickets 100, sowie einen Hinweis/Referenz auf die Overlaybilddatei und die Hintergrundbilddatei. Die Gesamtdatei für einen Ticketjob von 3.000 Tickets 100 umfasst somit vorzugsweise 9.000 Zeilen.

Der Produktionsrechner verwendet pro Zeile vorzugsweise beide Bildelemente 1001, 1002 und erzeugt daraus ein gemeinsames Bild. Vorzugsweise wird die Schrift aus der Overlaydatei 1002 bei einem dunklen Hintergrundbild 1001 invertiert dargestellt, d. h. das Material wird in dem Bereich nicht bedruckt (kein weißer Druck) und das tatsächliche Ticketmaterial (weißes Papier) erzeugt so die Schrift, da die umgebenden Bereiche bedruckt sind. Alternativ wird vorzugsweise bei einem hellen Hintergrundbild die Schrift aus der Overlaydatei 1002 schwarz (z. B. CMYK) gedruckt. So können vorzugsweise völlig variabel Tickets 100 mit wechselnden Informationen (Overlaydatei 1002) und Hintergrundbildern 1001 gedruckt werden.

In einem Ausführungsbeispiel umfassen die Zeilen der CSV-Datei jeweils die Spalten:

| 1) | Ticket ID | Alphanumerisch Numerisch 0 bis 9 |
|---|---|---|
| 2) | Barcode-Information 1 | z.Z. Nummerisch 0 bis 9. maximal 24 Zeichen. In der Barcode Information ist vorzugsweise die Veranstaltung und ggf. Sitzplatz und ähnliches kodiert. |
| 3) | Barcode-Information 2 | z.Z. Nummerisch 0 bis 9, maximal 12 Zeichen. In der Barcode Information ist vorzugsweise die Veranstaltung und ggf. Sitzplatz und ähnliches kodiert. |
| 4) | Referenz auf Hintergrundbilddatei 1001 | Dateiname der Hintergrundbilddatei (z.B. BruceSpringsteen26062012_1900_Berlin.tif) |
| 5) | Referenz Text-Bild (Overlay) 1002 | Dateiname der variablen Bilddatei (z.B. ABCD000001_BruceSpringsteen.tif) |

Die Datenübertragung der Bilddateien erfolgt mit einer Produktion im Wesentlichen ohne Ladepausen. Während der Verarbeitung eines Druckjobs, wird ein weiterer Druckjob in den Produktionsrechner geladen, wobei die Durchführung des Drucks Priorität hat. Mit geringster Priorität kann ein bereits beendeter Job gelöscht werden, d.h. die Prozesse arbeiten vorzugsweise parallel und es kommt dadurch zu keinen Produktionswartezeiten durch eine Druckaufbereitung, das Laden oder Löschen von Jobs.

Parallel zu den aktuellen Druckvorgängen wird der Druckserver während des Druckens neue Jobdaten einlesen (z. B. wieder die bis zu 4.500 Tickets pro Charge) und die gedruckten Dateien verschieben bzw. löschen. Vorzugsweise löscht der Controller 10 die Dateien, da diese auf der externen Quelle 2 noch vorhanden sind bzw. dort auch für Nachdruckfunktionen usw. archiviert werden können. Um neben der Priorisierung für den Controller 10 keine Einschränkungen durch Datenzugriffszeiten zu erhalten, werden vorzugsweise 2 oder mehr SSD Festplatten vorgesehen, damit die vorher genannten Prozesse parallel abgearbeitet werden können. Dadurch sind die Dateien nur einmal abgelegt und sind zugänglich auf dem externen Speichermedium 2.

Der Controller 10 wird vorzugsweise bezogen auf seine Rechenkapazität mit Priorität 1 den Drucker 30 ansteuern, mit Priorität 2 neue Ticketdaten laden (bzw. holen), und mit Priorität 3 die gedruckten Ticketdaten verschieben bzw. löschen. Die Archivierung der Dateien / Druckjobs findet vorzugsweise extern statt. Nachdrucke werden aus dem Archiv gesteuert.

### Sonstiger Input

(1) Tinte UV-Härtend, YMCK, für die Druckvorrichtung 30.

### Output des Systems

### Bedruckung

Wie in Fig. 4 gezeigt, sind die einzelnen Produkte 100 schlussendlich mit den jeweils in der CSV-Datei referenzierten Bildern 1001, 1002 bedruckt.

In variablen Bereichen ist ein variabler Barcode 1003 und ggf. einer Klarschriftziffer gedruckt. Die Daten der CSV-Datei wurden für Barcode 1003 und ggf. Klarschriftziffer angewendet.

Die Barcodes 1003 befinden sich vorzugsweise im Sichtfeld der Kamera 40, um mit nur einer Kamera 40 gelesen werden zu können (wie vorstehend beschrieben).

Die Tickets 100 sind vorzugsweise am Anfang und am Ende, sowie oben und unten, mit einem Rand von ca. 1 mm versehen, so dass die zu druckenden Bilder und/oder Barcodes 1003 nicht auf ein anderes Bild überlappen und der geforderte Layout-Abstand eingehalten wird.

| Barcode Typ | Vorzugsweise 2 aus 5 interleaved und Code 128 |
|---|---|
| Barcode 1 Größe | Vorzugsweise mind. 27 mm x 8 mm (inklusive Klartext) - bei 12 nummerischen Zeichen (Code 128) |
| Barcode 2 Größe | Vorzugsweise mind. 12 mm x 45 mm (inklusive Klartext) - bei 24 nummerischen Zeichen (2 aus 5 Interleaved) |
| Qualität Barcode | Die Qualität der Barcodes hängt vom Substrat, Größe und sonstigen Gegebenheiten (z. B. Ruhezonen) ab |
| Farbe Barcode | Der Barcode wird vorzugsweise schwarz gedruckt |
| Hintergrundfarbe Barcode | Die Hintergrundfarbe beim Barcode ist vorzugsweise weiß. Es wird vorzugsweise entsprechend Platz für die Ruhezonen des Barcodes berücksichtigt. Ruhezone = mind. 10 x Modulbreite, jedoch mind. 2,5 mm. |

### Kamera-Prüfung

Der Barcode und Klarschriftziffer wurden auf Lesbarkeit geprüft, wie vorstehend beschrieben.

### Ausgangs-Stapel

Die verarbeiteten Produkte 100 werden vorzugsweise als Z-Stapel ausgelegt. Es dürfen die ersten 3 Produkte 100 eines Stapels unbedruckt bleiben (variabel), wenn das aus Gründen der Zuführung nötig sein sollte.

### Produktionsinformation

Eine Datei aller geprüften Einzelprodukte 100 wird im CSV-Format erstellt. Alternativ kann auch die vorstehend beschriebene CSV-Datei ergänzt werden. Die Datei umfasst vorzugsweise die folgenden Spalten:

| | |
|---|---|
| a) | Datum des Rechners |
| b) | Uhrzeit des Rechners |
| c) | Bediener |
| d) | Barcode Information |
| e) | Kamera Lesung |
| f) | Gut-Schlecht Flag |

Der Dateiname entspricht der Eingangs CSV-Datei. Die Dateierweiterung ist "OK" bzw. "NOK" abhängig vom Prüfungsergebnis der Kamera 40.

### Leistung des Systems

| | |
|---|---|
| Druckgenauigkeit / Wiederholgenauigkeit | +/- 1mm |
| Max. Papiergeschwindigkeit | 24 m/min |
| Max. Produkte pro Zeit | 118 1/min |

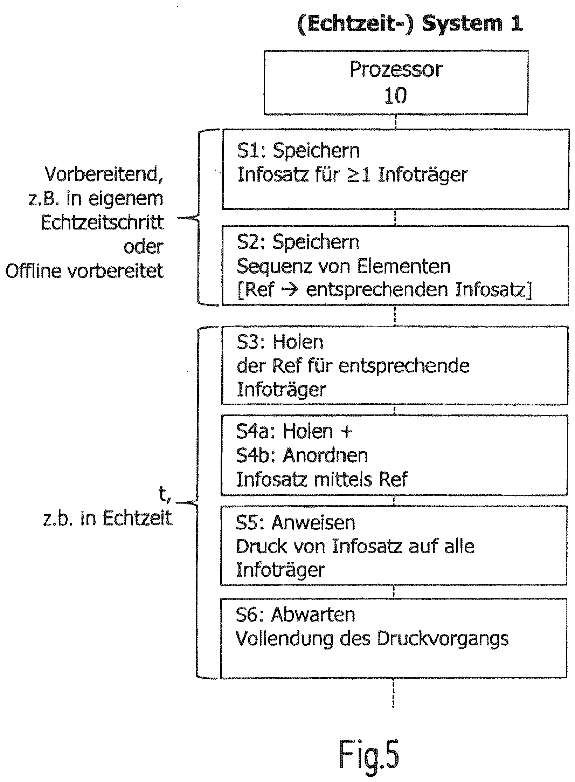

Fig. 5 zeigt einen Verfahrensaspekt der erfindungsgemäßen Vorrichtung. Das erfindungsgemäße Verfahren zum Steuern des Systems 1 umfasst folgende Schritte.

In einem Schritt S1 umfasst das Verfahren Speichern, für jeden einzelnen der Vielzahl von Informationsträgern 100, eines individuellen Satzes von Informationen, und ein einem Schritt S2 Speichern einer Sequenz von Elementen für jeden einzelnen der Vielzahl von Informationsträgern 100, wobei jede Sequenz eine Referenz auf den entsprechenden individuellen Satz von Informationen aufweist.

Innerhalb einer vordefinierten Zeitspanne t werden die folgenden Schritte ausgeführt:
- Schritt S3 Holen, für einen einzelnen Informationsträger 100, der entsprechenden Referenz aus der Speichervorrichtung 20,
- Schritte S4a Holen und S4b Anordnen, für den einzelnen Informationsträger 100, des entsprechenden Satzes von Informationen aus der Speichereinrichtung 20 mittels der Referenz,
- Schritt S5 Anweisen einer Druckvorrichtung 30, den einzelnen Informationsträger 100 mit dem geholten und angeordneten Satz von Information zu bedrucken, und
- Schritt S6 Abwarten einer Vollendung des Druckvorgangs.

### Sondersituationen in der Produktion

Nachstehend werden Sondersituationen bzw. Ausnahmefälle und deren Behandlung beschrieben.

### Druckmarke wird nicht erkannt

Wenn die Druckmarke (auf der Unterseite des Informationsträgers 100) nicht detektiert wurde, dann wird kein Druck ausgelöst, und ein unbedrucktes Einzelprodukt 100 wird durch das System 1 erstellt. Durch den nicht vorhandenen Barcode 1003 wird dieses Produkt 100 nach dem Schneidevorgang im Kuvertiersystem automatisch ausgeschleust.

### Kamera 40 klassifiziert den Barcode als schlecht

Das negative Ergebnis der Kamera 40 führt zu einem Maschinenstopp. Alle bis dahin vom Produktsensor 80 detektierten Produkte 100 werden normal bearbeitet, dann stoppt das System 1. Der Benutzer entwertet vorzugsweise manuell das Produkt 100 mit dem negativen Kameraergebnis, sowie alle nachfolgend bearbeiteten Produkte 100, indem der Barcode 1003, z. B. durch einen Stift, unleserlich gemacht wird.

Der Benutzer kontrolliert die Produkte 100 und reinigt ggf. den Drucker 30. Der Benutzer setzt vorzugsweise den File-Pointer der CSV-Datei auf das als schlecht gelesene Produkt 100 (z.B. den Identifikator bzw. Ticket-ID) und fährt mit der Produktion fort.

Da die entwerteten Tickets 100 sowie nicht bearbeiteten Tickets 100 nach dem Schneidevorgang im Kuvertiersystem automatisch ausgeschleust werden, werden die vorzugsweise Tickets 100 "strictly in sequence" an die Kuvertiermaschine übergeben.

### Bediener erkennt Druckfehler im Bild

Wenn der Bediener im Bild selbst Störungen erkennt (die nicht automatisch erfasst wurden), dann hält vorzugsweise der Bediener die Druckmaschine 30 an und behebt das Problem. Zur besseren Erkennung der Qualität des Druckbildes wird vorzugsweise das Kamerasystem genutzt, welches den Barcode 1003 im Drucksystem liest, und wird auf einem separaten Bildschirm das Kamerabild vorzugsweise mit deutlicher Vergrößerung dargestellt, welches neben dem Barcode 1003 auch Teile des gedruckten Bildes zeigt.

Der Bediener entfernt die physikalischen Fehldrucke oder beschädigten Einzelprodukte 100. Die nun in dem Ausgangs-Stapel fehlenden Produkte 100 werden der Druckmaschine 30 vorzugsweise erneut z.B. vom ERP als Dateien zugestellt.

Alternativ können, wie vorstehend beschrieben, die Produkte 100 entwertet werden und durch Versetzen des File-Pointers in der CSV-Datei nochmal gedruckt werden. Auf diese Art bleiben die Produkte 100 "strictly in sequence" und können der Kuvertiermaschine übergeben werden.

### Produkt-Ende vor Datei-Ende

Wenn das letzte physikalische Produkt 100 eines Stapels produziert wurde, dann erhält der Controller 10 keine weiteren Produkt-Trigger und druckt nicht mehr.

Der Bediener stoppt die Maschine und legt neue Roh-Produkte an und startet die Maschine erneut. Mit dem ersten Produkt-Trigger wird streckenverzögert der erste Druck ausgelöst.

Ein Vorlauf (leeres Ticket 100) ist immer möglich, da die Einlage z.B. manuell erfolgt.

### Datei-Ende vor Produkt-Ende

Die Druckmaschine 30 fährt das letzte Produkt bis an das Ende der Druckmaschine 30, so dass der Bediener nach dem letzten bedruckten Einzelprodukt 100 abreißen kann.

Die bedruckten Produkte 100 kommen in den Ausgangs-Stapel, die unbedruckten können für einen neuen Batch (neue Datei bzw. Sequenz von Elementen) verwendet werden.

### Bezugszeichenliste

- 100: Informationsträger (Produkt, Ticket)
- 1: System
- 2: Festplatte (externe Quelle)
- 10: Prozessor (Controller)
- 20: Speichervorrichtung
- 30: Druckvorrichtung (Drucker, Druckmaschine, Farbdrucker)
- 40: Prüfvorrichtung (Kamera)
- 45: Transportband
- 50: Auflagerollen
- 60: Behälter
- 70: Ausrichtkante
- 80: Produktsensor

- 1001: Hintergrundbild
- 1002: Vordergrundbild
- 1003: Variable Daten, Barcode

- t: Zeitspanne
- S1: Speichern
- S2: Speichern
- S3: Holen
- S4a: Holen
- S4b: Holen
- S5: Anweisen
- S6: Abwarten

## Patentansprüche

1. System (1) zum Bedrucken einer Vielzahl von Informationsträgern (100) mit einem individuellen Satz von Informationen, umfassend:
eine Speichervorrichtung (20), die eingerichtet ist, um:
- für jeden einzelnen der Vielzahl von Informationsträgern (100) einen individuellen Satz von Informationen zu speichern, und
- eine Sequenz von Elementen für jeden einzelnen der Vielzahl von Informationsträgern (100) zu speichern, wobei jede Sequenz eine Referenz auf den entsprechenden individuellen Satz von Informationen aufweist;
eine Druckvorrichtung (30), die eingerichtet ist, um jeden einzelnen der Informationsträger (100) mit dem entsprechenden Satz von Informationen zu bedrucken;
eine Prüfvorrichtung (40), die eingerichtet ist, um einen einzelnen Informationsträger (100) mit dem entsprechenden Satz von Informationen zu vergleichen;
einen Prozessor (10), der eingerichtet ist, um innerhalb einer vordefinierten Zeitspanne (t):
- für einen einzelnen Informationsträger (100) die entsprechende Referenz aus der Speichervorrichtung (20) zu holen,
- für den einzelnen Informationsträger (100) den entsprechenden Satz von Informationen aus der Speichervorrichtung (20) mittels der Referenz zu holen und anzuordnen,
- die Druckvorrichtung (30) anzuweisen, den einzelnen Informationsträger (100) mit dem geholten und angeordneten Satz von Information zu bedrucken,
- eine Vollendung des Druckvorgangs abzuwarten,
- die Prüfvorrichtung (40) zum Vergleichen der einzelnen Informationsträgern (100) anzuweisen, und
- die Vollendung des Prüfvorgangs abzuwarten,
**dadurch gekennzeichnet, dass** der Informationsträger ein Ticket ist und dass das Ticket einen Zugangskontrollcode und einen Ticket-ID-Code umfasst, und dass ein datenbankgestütztes Kuvertieren stattfindet, wobei ein Einzelblattdrucksystem vorgesehen ist, welches eingerichtet ist, mindestens einen Lieferschein, insbesondere ein Anschreiben inklusive einer postalischen Adresse, zu drucken;
wobei ein Zusammenführen des mindestens einen Lieferscheins mit mindestens einem der Tickets (100) stattfindet; wobei
gegebenenfalls mehrere Tickets (100) pro Sendung und/oder pro zu versendendem Kuvert mit dem jeweiligen Lieferschein zusammengeführt werden und als fertige Sendung aus einem Kuvertiersystem ausgegeben werden,
wobei das System ferner einen Schneideautomat mit mindestens zwei Barcodelesern umfasst,
wobei der Ticket-ID-Code mit einem ersten Barcodelesekopf und der Zugangskontrollcode mit einem zweiten Barcodelesekopf gelesen wird, wobei die gelesene Ticket-ID mit einer Information aus einer Steuerdatei verglichen wird, und
wobei, falls keine Ticket-ID lesbar ist, der Zugangskontrollcode gelesen wird und mit einer Information aus der Steuerdatei verglichen wird, und wobei, wenn keine der beiden Barcode-Informationen lesbar ist und/oder korrekt verifiziert werden kann,
das Ticket mit einem Lesefehler, durch Aussteuern des Kuvertierprozesses, zur manuellen Nachkontrolle entzogen wird.

2. System gemäß Anspruch 1, wobei der Satz von Informationen zumindest zwei Bilddateien umfasst.

3. System gemäß Anspruch 2, wobei eine erste der Bilddateien eine Hintergrundbilddatei (1001) und eine zweite der Bilddateien eine Vordergrundbilddatei (1002) ist, wobei die Hintergrundbilddatei (1001) für alle der Vielzahl von Tickets (100) identisch ist und die Vordergrundbilddatei (1002) für jedes einzelne der Vielzahl von Tickets (100) individuell verschieden ist.

4. System gemäß Anspruch 3, wobei der Anordnungsvorgang durch den Prozessor (10) derart ausgeführt wird, dass die Vordergrundbilddatei (1002) der Hintergrundbilddatei (1001) überlagert wird.

5. System gemäß Anspruch 3 oder 4, wobei der Druckvorgang durch den Prozessor (10) derart ausgeführt wird, dass die Vordergrundbilddatei (1002) und die Hintergrundbilddatei (1001) zu einem vordefinierten Satz von Parametern zusammengefasst werden.

6. System gemäß Anspruch 5, wobei der vordefinierte Satz von Parametern ein Druckjob ist.

7. System gemäß zumindest einem der Ansprüche 3 bis 6, wobei zumindest die Vordergrundbilddatei (1002) von einer externen Quelle (2) vorab bereitgestellt wird.

8. System gemäß zumindest einem der Ansprüche 3 bis 7, wobei die Bilddateien (1001, 1002) in einem Format gespeichert werden, das aus einer Gruppe ausgewählt wird, die TIF-Dateien und PNG-Dateien enthält.

9. System gemäß Anspruch 8, wobei die zumindest eine der Bilddateien (1001, 1002) in komprimierter Form vorliegt.

10. System gemäß zumindest einem der vorhergehenden Ansprüche, wobei die Schritte Holen, Holen und Anordnen, Bedrucken und Abwarten unter Echtzeitbedingungen während der Zeitspanne t durchgeführt werden.

11. System gemäß zumindest einem der vorhergehenden Ansprüche, wobei die Speicherschritte separat von den Schritten Holen, Holen und Anordnen, Bedrucken und Abwarten vorbereitend unter eigenen Echtzeitbedingungen ausgeführt werden.

12. System gemäß zumindest einem der Ansprüche 1 bis 10, wobei die Speicherschritte separat von den Schritten Holen, Holen und Anordnen, Bedrucken und Abwarten vorbereitend und nicht unter Echtzeitbedingungen ausgeführt werden.

13. System gemäß zumindest einem der vorangegangenen Ansprüche, wobei jede Sequenz von Elementen mit einem eindeutigen Identifikator zur Identifikation des jeweiligen Tickets (100) beginnt.

14. System gemäß Anspruch 13, wobei jede Sequenz von Elementen die Referenz auf den Satz von Informationen in Form eines Pfads und Dateinamens enthält.

15. System gemäß Anspruch 13 oder 14, wobei die Sequenzen von Elementen in einer Datei im ASCII-Format abgespeichert werden.

16. System gemäß Anspruch 15, wobei die Datei im Format Comma Separated Value, CSV, gespeichert wird.

17. System gemäß zumindest einem der Ansprüche 3 bis 16, wobei der Prozessor (10) eingerichtet ist, um während der aktuellen Druckvorgänge:
- jede einzelne Referenz nach erfolgtem Druckvorgang umzubenennen.

18. System gemäß zumindest einem der Ansprüche 3 bis 17, wobei der Prozessor (10) eingerichtet ist, um während der aktuellen Druckvorgänge:
- für die nächste Vielzahl von Tickets (100) der entsprechenden nächsten Referenzen aus der Speichervorrichtung (20) zu holen,
- für die nächste Vielzahl von Tickets (100) den entsprechenden Satz von Informationen aus der Speichervorrichtung (20) mittels der Referenzen zu holen und anzuordnen, und
- die Vollendung der aktuellen Druckvorgänge abzuwarten.

19. System gemäß Anspruch 18, wobei nach Vollendung der aktuellen Druckvorgänge der Prozessor (10) eingerichtet ist, um den aktuellen Satz von Informationen in der Speichervorrichtung (20) zu verschieben.

20. System gemäß Anspruch 18, wobei nach den aktuellen Druckvorgängen der Prozessor (10) eingerichtet ist, um den aktuellen Satz von Informationen in der Speichervorrichtung (20) zu löschen.

21. System gemäß Anspruch 19 oder 20, wobei der Prozessor (10) eingerichtet ist, um:
- den Druckvorgang mit einer ersten Priorität auszuführen,
- den Holvorgang mit einer zweiten Priorität auszuführen, die kleiner als die erste Priorität ist, und
- den Verschiebe- bzw. Löschvorgang mit einer dritten Priorität auszuführen, die kleiner als die erste und zweite Priorität ist.

22. System gemäß einem der vorangegangenen Ansprüche, wobei der Prozessor (10) weiterhin eingerichtet ist, um innerhalb der vordefinierten Zeitspanne t:
- das Vergleichsergebnis in der entsprechenden Sequenz von Elementen zu protokollieren.

23. System gemäß zumindest einem der vorangegangenen Ansprüche, wobei das Ticket (100) aus einem einzelnen Papierbogen oder einem Endlospapierbogen hergestellt ist.

24. Prozessor zur Verwendung in einem System gemäß zumindest einem der Ansprüche 1 bis 23 als Verwaltungsvorrichtung.

25. Verfahren zum Steuern eines Systems (1) zum Bedrucken einer Vielzahl von Informationsträgern (100) mit einem individuellen Satz von Informationen, umfassend die Schritte:
Speichern (S1), für jeden einzelnen der Vielzahl von Informationsträgern (100), eines individuellen Satzes von Informationen, und
Speichern (S2) einer Sequenz von Elementen für jeden einzelnen der Vielzahl von Informationsträgern (100), wobei jede Sequenz eine Referenz auf den entsprechenden individuellen Satz von Informationen aufweist;
innerhalb einer vordefinierten Zeitspanne (t):
- Holen (S3), für einen einzelnen Informationsträger (100), der entsprechenden Referenz aus der Speichervorrichtung (20),
- Holen (S4a) und Anordnen (S4b), für den einzelnen Informationsträger (100), des entsprechenden Satzes von Informationen aus der Speichervorrichtung (20) mittels der Referenz,
- Anweisen (S5) einer Druckvorrichtung (30), den einzelnen Informationsträger (100) mit dem geholten und angeordneten Satz von Information zu bedrucken,
- Abwarten (S6) einer Vollendung des Druckvorgangs,
- Anweisen einer Prüfvorrichtung (40) zum Vergleichen des einzelnen Informationsträgers (100) mit dem entsprechenden Satz von Informationen, und
- Abwarten der Vollendung des Prüfvorgangs,
**dadurch gekennzeichnet, dass**
der Informationsträger ein Ticket ist und dass das Ticket einen Zugangskontrollcode und einen Ticket-ID-Code umfasst, und dass in weiteren Schritten ein datenbankgestütztes Kuvertieren stattfindet, wobei ein Einzelblattdrucksystem vorgesehen ist, welches eingerichtet ist, mindestens einen Lieferschein, insbesondere ein Anschreiben inklusive einer postalischen Adresse, zu drucken;
wobei ein Zusammenführen des mindestens einen Lieferscheins mit mindestens einem der Tickets (100) stattfindet; und wobei gegebenenfalls mehrere Tickets (100) pro Sendung und/oder pro zu versendendem Kuvert mit dem jeweiligen Lieferschein zusammengeführt werden und als fertige Sendung aus einem Kuvertiersystem ausgegeben werden,
wobei der Prüfvorgang die Schritte umfasst:
- Lesen des Ticket-ID-Codes mit einem ersten Barcodelesekopf eines Schneideautomaten und Lesen des Zugangskontrollcodes mit einem zweiten Barcodelesekopf des Schneideautomaten, Vergleichen der gelesenen Ticket-ID mit einer Information aus einer Steuerdatei und, falls keine Ticket-ID gelesen werden kann, Lesen und Vergleichen des Zugangskontrollcodes mit einer Information aus der Steuerdatei, und wenn keine der beiden Barcode-Informationen lesbar ist und/oder korrekt verifiziert werden kann, Entziehen des Tickets mit einem Lesefehler zu einer manuellen Nachkontrolle, durch Aussteuern des Kuvertierprozesses.

26. Computerprogrammprodukt mit Programmcodeabschnitten zum Durchführen des Verfahrens gemäß dem vorhergehenden Verfahrensanspruch, bei Ausführung des Computerprogrammprodukts auf einer oder mehreren Computereinrichtungen.

27. Computerprogrammprodukt gemäß Anspruch 26, das auf einem computerlesbaren Medium gespeichert ist.

## Claims

1. A system (1) for printing an individual set of information on a multiplicity of information carriers (100), comprising:
a storage device (20) which is configured to:
- store an individual set of information for each one of the multiplicity of information carriers (100); and
- store a sequence of elements for each one of the multiplicity of information carriers (100), wherein each sequence has a reference to the corresponding individual set of information;
a printing device (30), which is configured to print the corresponding set of information on each one of the information carriers (100);
a testing device (40), which is configured to compare an individual information carrier (100) with the corresponding set of information,
a processor (10), which is configured to do the following within a predefined time span (t):
- fetch the corresponding reference from the storage device (20) for an individual information carrier (100),
- fetch and arrange the corresponding set of information from the storage device (20) for the individual information carrier (100) by means of the reference;
- instruct the printing device (30) to print the fetched and arranged set of information on the individual information carrier (100),
- wait for completion of the printing process,
- instruct the testing device (40) to compare the individual information carriers (100), and
- wait for the completion of the testing process,
**characterized in that** the information carrier is a ticket, and that the ticket comprises an admission control code and a ticket ID code, and that a database-driven enveloping is carried out, wherein a single sheet printing system is provided, which is configured to print at least one delivery note, in particular one letter including a postal address;
wherein a combination of the at least one delivery note with at least one of the tickets (100) is carried out, wherein,
if necessary, several tickets (100) per mailing and/or per envelope to be sent are combined with the corresponding delivery note and are issued as a complete mailing from an enveloping system,
wherein the system further comprises a cutting machine with at least two bar code readers,
wherein the ticket ID code is read by a first bar code read head and the admission control code is read by a second bar code read head, wherein the read ticket ID is compared to a piece of information from a control file, and wherein, if no ticket ID is readable, the admission control code is read and compared with a piece of information from the control file, and wherein, if none of the two pieces of bar code information is readable and/or can be correctly verified, the ticket with a read error is withdrawn for manual re-check by control of the enveloping process.

2. The system according to claim 1, wherein the set of information comprises at least two image files.

3. The system according to claim 2, wherein a first one of the image files is a background image file (1001) and a second one of the image files is a foreground image file (1002), wherein the background image file (1001) is identical for all of the plurality of tickets (100) and the foreground image file (1002) is individually different for each one of the plurality of tickets (100).

4. The system according to claim 3, wherein the arranging process is carried out by the processor (10) in such a way that the foreground image file (1002) is superimposed on the background image file (1001).

5. The system according to claim 3 or 4, wherein the printing process is carried out by the processor (10) in such a way that the foreground image file (1002) and the background image file (1001) are combined into a predefined set of parameters.

6. The system according to claim 5, wherein the predefined set of parameters is a print job.

7. The system according to at least one of claims 3 to 6, wherein at least the foreground image file (1002) is provided in advance from an external source (2).

8. The system according to at least one of claims 3 to 7, wherein the image files (1001, 1002) are stored in a format selected from a group containing TIF files and PNG files.

9. The system according to claim 8, wherein the at least one of the image files (1001, 1002) is in compressed form.

10. The system according to at least one of the preceding claims, wherein the steps of fetching, fetching and arranging, printing and waiting are carried out under real-time conditions during the time span t.

11. The system according to at least one of the preceding claims, wherein the storage steps are performed separately from the steps of fetching, fetching and arranging, printing and waiting and preparatively under own real-time conditions.

12. The system according to at least one of claims 1 to 10, wherein the storing steps are carried out separately from the steps of fetching, fetching and arranging, printing and waiting and preparatively and not under real time conditions.

13. The system according to at least one of the preceding claims, wherein each sequence of elements starts with a unique identifier for identifying the respective ticket (100).

14. The system according to claim 13, wherein each sequence of elements contains the reference to the set of information in the form of a path and file name.

15. The system according to claim 13 or 14, wherein the sequences of elements are stored in a file in ASCII format.

16. The system according to claim 15, wherein the file is stored in the format Comma Separated Value, CSV.

17. The system according to at least one of claims 3 to 16, wherein the processor (10) is configured to do the following during the current printing processes:
- rename each individual reference after the printing process has been carried out.

18. The system according to at least one of claims 3 to 17, wherein the processor (10) is configured to do the following during the current printing processes:
- fetch from the storage device (20) for the next plurality of tickets (100) the respective next references,
- fetch and arrange the corresponding set of information from the storage device (20) for the next plurality of tickets (100) by means of the references, and
- wait for the completion of the current printing processes.

19. The system according to claim 18, wherein upon completion of the current printing processes, the processor (10) is configured to move the current set of information in the storage device (20).

20. The system according to claim 18, wherein after the current printing processes, the processor (10) is configured to delete the current set of information in the storage device (20).

21. The system according to claim 19 or 20, wherein the processor (10) is configured to:
- execute the printing process with a first priority,
- execute the fetching process with a second priority that is smaller than the first priority, and
- execute the moving or deleting process with a third priority that is smaller than the first and second priority.

22. The system according to one of the preceding claims, wherein the processor (10) is further configured to do the following within the predefined time span t:
- log the comparative result in the corresponding sequence of elements.

23. The system according to at least one of the preceding claims, wherein the ticket (100) is manufactured from a single paper sheet or a continuous paper sheet.

24. Processor for use in a system according to at least one of claims 1 to 23 as an administration device.

25. A method for controlling a system (1) for printing an individual set of information on a plurality of information carriers (100), comprising the steps of:
storing (S1) an individual set of information for each one of the plurality of information carriers (100), and
storing (S2) a sequence of elements for each one of the plurality of information carriers (100), wherein each sequence has a reference to the corresponding individual set of information;
within a predefined time span (t):
- fetching (S3) the corresponding reference from the storage device for an individual information carrier (100),
- fetching (S4a) and arranging (S4b) the corresponding set of information from the storage device for the individual information carrier (100) by means of the reference;
- instructing (S5) a printing device (30) to print the fetched and arranged set of information on the individual information carrier (100);
- waiting (S6) for a completion of the printing process.
- instructing the testing device (40) to compare the individual information carrier (100) with the corresponding set of information, and
- waiting for the completion of the testing process,
**characterized in that**
the information carrier is a ticket, and that the ticket comprises an admission control code and a ticket ID code, and that in further steps a database-driven enveloping is carried out, wherein a single sheet printing system is provided, which is configured to print at least one delivery note, in particular one letter including a postal address;
wherein a combination of the at least one delivery note with at least one of the tickets (100) is carried out, and wherein, if necessary, several tickets (100) per mailing and/or per envelope to be sent are combined with the corresponding delivery note and are issued as a complete mailing from an enveloping system,
wherein the testing process comprises the steps of:
- reading the ticket ID code with a first bar code read head of a cutting machine and reading the admission control code with a second bar code read head of the cutting machine, comparing the read ticket ID to a piece of information from a control file, and, if no ticket ID can be read, reading an comparing the admission control code with a piece of information from the control file, and, if none of the two pieces of bar code information is readable and/or can be correctly verified, withdrawing the ticket with a read error for manual re-check by control of the enveloping process.

26. A computer program product having program code portions for carrying out the method according to the preceding method claim, when the computer program product is executed on one or more computer devices.

27. The computer program product according to claim 26, which is stored on a computer-readable medium.

## Revendications

1. Système (1) pour imprimer une pluralité de supports d'informations (100) avec un ensemble individuel d'informations comprenant :
un dispositif de mémoire (20), qui est agencé :
- pour mémoriser un ensemble individuel d'informations pour chaque support d'informations individuel de la pluralité des supports d'informations (100), et
- pour mémoriser une séquence d'éléments pour chaque support d'informations individuel de la pluralité de supports d'informations (100), chaque séquence comportant une référence sur l'ensemble d'informations individuel correspondant,
- un dispositif d'impression (30), qui est agencé pour imprimer chacun des supports d'informations individuels (100) avec l'ensemble d'informations correspondant,
un dispositif de contrôle (40), qui est agencé pour comparer un support d'informations individuel (100) à l'ensemble d'informations correspondant,
un processeur (10), qui, à l'intérieur d'une période prédéfinie (t), est agencé pour:
- collecter la référence correspondante pour un support d'informations individuel (100) à partir du dispositif de mémoire (20),
- collecter et mettre en place l'ensemble d'informations correspondant à partir du dispositif de mémoire (20) au moyen d'une référence pour le support d'informations individuel (100),
- informer le dispositif d'impression (30) d'imprimer le support d'informations individuel (100) avec l'ensemble d'informations collecté et mis en place,
- d'attendre un achèvement de l'opération d'impression,
- d'informer le dispositif de contrôle (40) de comparer les supports d'informations individuels (100), et
- d'attendre l'achèvement de l'opération de contrôle,
**caractérisé en ce que** le support d'informations est un ticket et **en ce que** le ticket comprend un code de contrôle d'accès et un code ID de ticket et **en ce qu'**une mise sous plis assistée par une banque de données a lieu, un système d'impression feuille à feuille étant prévu, lequel est agencé pour imprimer au moins un bon de livraison, notamment une inscription y compris d'une adresse postale,
une réunion du au moins un bon de livraison avec au moins un des tickets (100) ayant lieu,
le cas échéant plusieurs tickets (100) par envoi et/ou par enveloppe à envoyer étant réunis avec le bon de livraison respectif et étant délivrés en tant qu'envoi prêt à partir d'un système de mise sous plis,
le système comprenant en outre une coupeuse automatique avec au moins deux lecteurs de code à barres,
le code ID de ticket étant lu avec une première tête de lecture de code à barres et le code de contrôle d'accès avec une deuxième tête de lecture de code à barres,
l'identifiant (ID) du ticket lue étant comparée à une information d'un fichier de commande et, au cas où aucun ID de ticket ne peut être lu, le code de contrôle d'accès étant lu et comparé à une information du fichier de commande et, si aucune des deux informations de code à barres ne peut être lue et/ou correctement vérifiée,
le ticket avec une erreur de lecture est retiré par actionnement du processus de mise sous plis, pour contrôle ultérieur manuel.

2. Système selon la revendication 1, l'ensemble d'informations comprenant au moins deux fichiers images.

3. Système selon la revendication 2, un premier des fichiers d'images étant un fichier images d'arrière-plan (1001) et un deuxième des fichiers images étant un fichier image de premier plan (1002), le fichier image d'arrière-plan (1001) étant identique pour tous les tickets de la pluralité de tickets (100) et le fichier image de premier plan (1002) étant individuellement différent pour chaque ticket individuel de la pluralité de tickets (100).

4. Système selon la revendication 3, l'opération de mise en place étant effectué par le processeur (10) de telle manière que le fichier image de premier plan (1002) est superposé au fichier image d'arrière-plan (1001).

5. Système selon la revendication 3 ou 4, l'opération d'impression étant effectuée par le processeur (10) de telle manière que le fichier image de premier plan (1002) et le fichier image d'arrière-plan (1001) sont réunis en un ensemble prédéfini de paramètres.

6. Système selon la revendication 5, l'ensemble prédéfini de paramètres étant un travail d'impression.

7. Système selon au moins l'une quelconque des revendications 3 à 6, au moins le fichier image de premier plan (1002) étant préalablement fourni par une source externe (2).

8. Système selon au moins l'une quelconque des revendications 3 à 7, les fichiers images (1001,1002) étant mémorisés dans un format, qui est choisi à partir d'un groupe, qui contient les fichiers TIF et PNG.

9. Système selon la revendication 8, au moins un des fichiers images (1001,1002) existant sous forme comprimée.

10. Système selon au moins l'une quelconque des revendications précédentes, les étapes de collecte, collecte et mise en place, impression et attente étant effectuées dans des conditions de temps réel pendant la période de temps « t ».

11. Système selon au moins l'une quelconque des revendications précédentes, les étapes de mémorisation étant effectuées en préparation dans des conditions de temps réel propres, séparément des étapes de collecte, collecte et mise en place, impression et attente.

12. Système selon au moins l'une quelconque des revendications 1 à 10, les étapes de mémorisation étant effectuées en préparation et pas dans des conditions de temps réel, séparément des étapes de collecte, collecte et mise en place, impression et attente.

13. Système selon au moins l'une quelconque des revendications précédentes, chaque séquence d'éléments commençant par un identifiant défini pour identifier le ticket respectif (100).

14. Système selon la revendication 13, chaque séquence d'éléments contenant la référence sur l'ensemble d'informations sous la forme d'un chemin et d'un nom de fichier.

15. Système selon la revendication 13 ou 14, les séquences d'éléments étant mémorisées dans un fichier de format ASCII.

16. Système selon la revendication 15, le fichier étant mémorisé en format CSV (comma separated value).

17. Système selon au moins l'une quelconque des revendications 3 à 16, le processeur (10) étant agencé pour, pendant les opérations d'impression actuelles, :
- renommer chaque référence individuelle une fois l'opération d'impression effectuée.

18. Système selon au moins l'une quelconque des revendications 3 à 17, le processeur (10) étant agencé pour, pendant les opérations d'impression actuelles, :
- collecter pour la pluralité suivante (100) de tickets, les références suivantes correspondantes à partir du dispositif de mémorisation (20),
- collecter et mettre en place au moyen des références pour la pluralité suivante de tickets (100) l'ensemble correspondant d'informations à partir du dispositif de mémorisation (20), et
- attendre l'achèvement des opérations d'impression actuelles.

19. Système selon la revendication 18, après achèvement des opérations d'impression actuelles, le processeur (10) étant agencé pour déplacer l'ensemble actuel des informations dans le dispositif de mémorisation (20).

20. Système selon la revendication 18, après les opérations d'impression actuelles, le processeur (10) étant agencé pour annuler l'ensemble actuel des informations dans le dispositif de mémorisation (20).

21. Système selon la revendication 19 ou 20, le processeur (10) étant agencé pour:
- exécuter l'opération d'impression avec une première priorité,
- exécuter l'opération de collecte avec une deuxième priorité, qui est plus petite que la première priorité, et
- exécuter l'opération de déplacement ou d'annulation avec une troisième priorité qui est plus petite que la première et la deuxième priorité.

22. Système selon l'une quelconque des revendications précédentes, le processeur (10) étant en plus agencé pour, à l'intérieur de la période prédéfinie « t »,
- consigner le résultat de comparaison dans la séquence correspondante des éléments.

23. Système selon au moins l'une quelconque des revendications précédentes, le ticket (100) étant fabriqué à partir d'une seule feuille de papier ou d'une feuille de papier sans fin.

24. Processeur pour utilisation dans un système selon au moins l'une quelconque des revendications 1 à 23 en tant que dispositif de gestion.

25. Procédé pour commander un système (1) pour l'impression d'une pluralité de supports d'informations (100) avec un ensemble individuel d'informations, comprenant les étapes de :
mémorisation (S1) pour chacun de la pluralité des supports d'informations individuels (100), d'un ensemble individuel d'informations, et
mémorisation (S2) d'une séquence d'éléments pour chacun de la pluralité des supports d'informations individuels (100), chaque séquence comportant une référence sur l'ensemble individuel correspondant d'informations,
à l'intérieur d'une période de temps prédéfinie (t) :
- collecte (S3) pour un support d'informations individuel (100), de la référence correspondante à partir du dispositif de mémorisation (20),
- collecte (S4a) et mise en place (S4b), pour le support d'informations individuel (100), de l'ensemble correspondant d'informations à partir du dispositif de mémorisation (20) au moyen de la référence,
- instruction (S5) à un dispositif d'impression (30) d'imprimer le support d'informations individuel (100) avec l'ensemble d'informations collecté et mis en place,
- attente (S6) d'un achèvement de l'opération d'impression,
- instruction à un dispositif de contrôle (40) de comparer le support d'informations individuel (100) à l'ensemble correspondant d'informations, et
- attente de l'achèvement de l'opération de contrôle,
**caractérisé en ce que**
le support d'informations est un ticket et **en ce que** le ticket comprend un code de contrôle d'accès et un code ID de ticket et **en ce que** dans d'autres étapes une mise sous plis assistée par une banque de données a lieu, un système d'impression feuille à feuille étant prévu, lequel est agencé pour imprimer au moins un bon de livraison, notamment une inscription y compris d'une adresse postale,
une réunion duau moins un bon de livraison avec au moins un des tickets (100) ayant lieu et le cas échéant plusieurs tickets (100) étant réunis par envoi et/ou par enveloppe à envoyer avec le bon de livraison respectif et étant édités en tant qu'envoi prêt à partir d'un système de mise sous plis,
l'opération de contrôle comprenant les étapes de :
- lecture du code ID de ticket avec une première tête de lecture de code à barres d'une découpeuse automatique et lecture du code de contrôle d'accès avec une deuxième tête de lecture de code à barres de la découpeuse automatique, comparaison de l'ID de ticket lu avec une information à partir d'un fichier de commande et, si aucun ID de ticket ne peut être lu, lecture et comparaison du code de contrôle d'accès avec une information à partir du fichier de commande et si aucune des deux informations de code à barres ne peut être lue et/ou correctement vérifiée, retrait du ticket avec une erreur de lecture pour un contrôle ultérieur manuel, par actionnement du processus de mise sous plis.

26. Produit programme d'ordinateur avec des sections de code de programme pour exécuter le procédé selon la revendication précédente, lors de l'exécution du produit programme d'ordinateur sur un ou plusieurs systèmes d'ordinateur.

27. Produit programme d'ordinateur selon la revendication 26, qui est mémorisé sur un milieu lisible par ordinateur.
